# EUROPÄISCHE PATENTSCHRIFT

(11) **EP 3 195 697 B1**
(45) Veröffentlichungstag und Bekanntmachung des Hinweises auf die Patenterteilung: **24.07.2019**
(21) Anmeldenummer: 15762607.8
(22) Anmeldetag: 10.09.2015
(51) Int. Cl.: H05B 33/08

(54) **SCHALTUNGSANORDNUNG ZUM BETREIBEN MINDESTENS EINER ERSTEN UND EINER ZWEITEN KASKADE VON LEDS**
CIRCUIT ASSEMBLY FOR OPERATING AT LEAST A FIRST AND A SECOND CASCADE OF LEDS
CIRCUIT POUR FAIRE FONCTIONNER AU MOINS UNE PREMIÈRE ET UNE DEUXIÈME CASCADE DE DEL

(30) Priorität: 17.09.2014 DE 102014218687
(43) Veröffentlichungstag der Anmeldung: 26.07.2017
(73) Patentinhaber: OSRAM GmbH, 80807 München (DE)
(72) Erfinder: SEIDER, Andreas, 84419 Obertaufkirchen (DE)
(86) Internationale Anmeldenummer: PCT/EP2015/070716
(87) Internationale Veröffentlichungsnummer: WO 2016/041840

(56) Entgegenhaltungen:
- DE-A1-102012 000 605
- DE-A1-102012 207 457
- DE-A1-102013 201 439
- US-A1- 2014 210 351

## Beschreibung

### Technisches Gebiet

Die vorliegende Erfindung betrifft eine Schaltungsanordnung zum Betreiben mindestens einer ersten und einer zweiten Kaskade von LEDS umfassend einen Eingang mit einem ersten und zweiten Eingangsanschluss zum Koppeln mit einer gleichgerichteten Versorgungswechselspannung, eine Spannungsausgleichslängsimpedanz, sowie zumindest eine erste, im Nachfolgenden auch als höher gelegen bezeichnete, und eine in Serie nachgeschaltete zweite, im Nachfolgenden auch als tiefer gelegen bezeichnete, LED-Einheit, wobei die erste LED-Einheit die erste Kaskade von LEDs und die zweite LED-Einheit die zweite Kaskade von LEDs umfasst. Dabei umfasst jede LED-Einheit weiterhin eine erste Diode, die seriell zu der jeweiligen LED-Kaskade gekoppelt ist, wobei der Kopplungspunkt der ersten Diode und der jeweiligen LED-Kaskade einen ersten Knoten darstellt, wobei der nicht mit der ersten Diode gekoppelte Anschluss der LED-Kaskade einen zweiten Knoten darstellt, wobei der nicht mit der LED-Kaskade gekoppelte Anschluss der ersten Diode einen dritten Knoten darstellt. Jede LED-Einheit umfasst weiterhin die Serienschaltung eines ersten Kondensators und einer zweiten Diode, die zwischen den dritten Knoten und einen vierten Knoten der Schaltungsanordnung gekoppelt ist, wobei der Kopplungspunkt des ersten Kondensators mit der zweiten Diode einen fünften Knoten darstellt, wobei die Anode der zweiten Diode mit dem fünften Knoten gekoppelt ist. Schließlich umfasst jede LED-Einheit einen ersten und einen zweiten elektronischen Schalter mit jeweils einer Steuerelektrode, einer Bezugselektrode und einer Arbeitselektrode, wobei die Steuerelektrode des ersten elektronischen Schalters mit einem sechsten Knoten gekoppelt ist, wobei die Bezugselektrode des ersten elektronischen Schalters mit dem fünften Knoten gekoppelt ist, wobei die Arbeitselektrode des ersten elektronischen Schalters mit der Steuerelektrode des zweiten elektronischen Schalters gekoppelt ist, wobei die Bezugselektrode des zweiten elektronischen Schalters mit dem dritten Knoten gekoppelt ist, wobei die Arbeitselektrode des zweiten elektronischen Schalters mit dem zweiten Knoten gekoppelt ist. Der dritte Knoten der höchstgelegenen LED-Einheit ist mit dem ersten Eingangsanschluss gekoppelt, wobei der zweite Knoten der tiefstgelegenen LED-Einheit derart mit der Spannungsausgleichslängsimpedanz gekoppelt ist, dass die Spannungsausgleichslängsimpedanz seriell zwischen den zweiten Knoten der tiefstgelegenen LED-Einheit und den zweiten Eingangsanschluss gekoppelt ist. Der dritte Knoten einer jeweiligen LED-Einheit, die nicht die höchstgelegene LED-Einheit darstellt, ist mit dem zweiten Knoten der nächst höher gelegenen LED-Einheit gekoppelt. Die sechsten Knoten aller LED-Einheiten sind mit einer Gleichspannungsquelle gekoppelt.

### Stand der Technik

Eine derartige Schaltungsanordnung ist bekannt aus der DE 10 2013 201 439 A1 und ist in Fig. 1a beispielhaft dargestellt. In diesem Zusammenhang ist weiterhin aus der DE 10 2012 215 933 A1 ein elektronisches Vorschaltgerät zum Betreiben mindestens einer ersten Einheit, die eine erste Kaskade von LEDs und einen dazu parallel geschalteten ersten Speicherkondensator umfasst, sowie mindestens einer zweiten Einheit, die zumindest eine zweite Kaskade von LEDs und einen dazu parallel geschalteten zweiten Speicherkondensator umfasst, bekannt. Die mindestens eine zweite Einheit umfasst überdies eine Diode, die zur Parallelschaltung der zweiten Kaskade von LEDs und des zweiten Speicherkondensators in Serie gekoppelt ist. Der mindestens einen zweiten Einheit ist ein Stellglied parallel geschaltet, das leitend, sperrend oder linear betrieben werden kann. Ein entsprechendes Stellglied ist auch seriell zu der Serienschaltung aus der ersten und mindestens einer zweiten Einheit angeordnet. Über einen Stromregler können die Stellglieder angesteuert werden, wobei der Sollwert proportional zum zeitlichen Verlauf der Versorgungswechselspannung bereitgestellt wird.

Die WO 2012/034102 A1 offenbart ein System zum direkten Ansteuern von Leuchtdioden (LEDs). Eine Kette von LEDs ist über eine Eingangsspannung gekoppelt und weist eine Mehrzahl von getrennten Gruppen von LEDs auf. Jeder einer Mehrzahl von Schaltern ist parallel gekoppelt mit einer zugeordneten Gruppe der Gruppen von LEDs zum Steuern des Stromflusses durch die zugeordnete Gruppe von LEDs in Abhängigkeit von einem Steuersignal von einer Steuerschaltung. Eine Schalter-Schutzschaltung ist mit mindestens einem der Schalter verbunden. Die Schalter-Schutzschaltung ist dazu ausgelegt, in dem Fall eines Ausfalls von einer LED in der zugeordneten Gruppe von LEDs den Schalter in einen leitenden Zustand zu versetzen.

Überdies wird aus dem weiteren Umfeld von der DE 10 2012 006 315 A1 eine für eine Wechselspannungsversorgung angepasste LED-Beleuchtungseinrichtung mit mehreren LEDS, welche eine Gesamtkette bilden, vorgeschlagen, wobei die LEDS in LED-Teilgruppen verteilt sind. In der LED-Beleuchtungsvorrichtung liegt eine Versorgungsspannung mit wechselnder Amplitude vor, wobei in einem niedrigeren Schaltungszustand der Gesamtkette mindestens zwei LED-Teilgruppen parallel zueinander verschaltet sind und wobei die Gesamtkette in dem niedrigeren Schaltungszustand eine erste Durchlassspannung aufweist. Eine Schaltungseinrichtung ist ausgebildet, die mindestens zwei LED-Teilgruppen in einem höheren Schaltungszustand seriell zueinander zu verschalten, wobei die Gesamtkette in dem höheren Schaltungszustand eine zweite Durchlassspannung aufweist, welche größer als die erste Durchlassspannung ist. Im Vergleich zu einer gattungsgemäßen Schaltungsanordnung ist jedoch bei einer Schaltungseinrichtung zur wahlweisen Seriell-Parallel-Verschaltung ein erhöhter schaltungstechnischer Aufwand zu verzeichnen. Überdies müssen parallelzuschaltende LED-Teilgruppen eine übereinstimmende Flussspannung aufweisen.

In einem breiteren Umfeld sind aus der US 2010/0060175 A1 eine Vorrichtung, ein Verfahren und ein System zum Zuführen von Leistung zu einer Last, wie beispielsweise einer Vielzahl von Leuchtdioden, bekannt. Eine beispielhafte Vorrichtung weist eine primäre Komponente, eine an eine erste Last koppelbare erste sekundäre Komponente und eine an eine zweite Last koppelbare zweite sekundäre Komponente auf. Die primäre Komponente umfasst einen Transformator mit einer Transformator-Primärwicklung. Die erste sekundäre Komponente umfasst eine erste Transformator-Sekundärwicklung, welche magnetisch mit der Transformator-Primärwicklung gekoppelt ist, und die zweite sekundäre Komponente umfasst eine zweite Transformator-Sekundärwicklung, welche magnetisch mit der Transformator-Primärwicklung gekoppelt ist, wobei die zweite sekundäre Komponente durch die erste oder die zweite Last in Serie an die erste sekundäre Komponente koppelbar ist. Wenn sie von einer Stromquelle versorgt wird, weist die erste sekundäre Komponente eine erste Polarität der Spannung auf und ist in Serie mit der ersten Last koppelbar, welche dazu ausgelegt ist, eine entgegengesetzte, zweite Polarität der Spannung aufzuweisen, wobei die Spannungen sich im wesentlichen gegenseitig aufheben, um einen vergleichsweise geringen resultierenden Spannungspegel bereitzustellen. Anders als bei einer gattungsgemäßen Schaltungsanordnung sind die Leuchtdioden jedoch nicht direkt, also nicht galvanisch gekoppelt, seriell zwischen eine gleichgerichtete Versorgungswechselspannung gekoppelt, sondern strangweise jeweils abwechselnd mit einer galvanisch von der primären Komponente getrennten sekundären Komponente angeordnet. Somit ergibt sich ein höherer Aufwand für die verteilte Versorgung durch die sekundären Komponenten und die galvanische Trennung mittels eines Transformators.

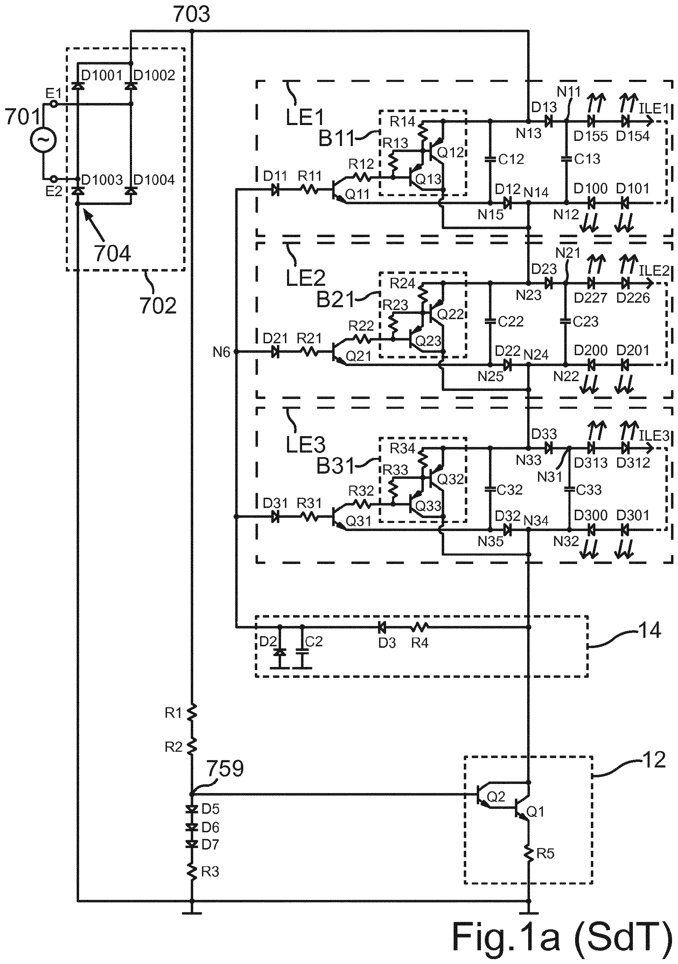

Bei der in Fig. 1a schematisch dargestellten Schaltungsanordnung ist eine Netzwechselspannung 701 über einen Gleichrichter 702 mit zwei Knoten 703 und 704 verbunden. Der Knoten 703 ist über die Serienschaltung zweier Widerstände R1 und R2 mit einem Knoten 759 verbunden. Der Knoten 759 ist über die Serienschaltung dreier Dioden D5, D6, D7 und einen ohmschen Widerstand R3 mit dem Knoten 704 gekoppelt, wobei die Kathoden der Dioden D5, D6, D7 in Richtung des Knotens 704 zeigen. Die ohmschen Widerstände R1, R2, die Dioden D5, D6, D7 und der ohmsche Widerstand R3 bilden einen Spannungsteiler, dessen Abgriff der Knoten 759 darstellt. Die Schaltungsanordnung umfasst weiterhin eine Spannungsausgleichslängsimpedanz 12, die vorliegend als Linearregler ausgeführt ist, der zwei NPN-Transistoren Q1, Q2 in Darlington-Anordnung sowie einen ohmschen Widerstand R5 umfasst, der seriell zu der genannten Darlington-Stufe Q1, Q2 gekoppelt ist. Die Basis des Transistors Q2 stellt den Steueranschluss des Linearreglers 12 dar und ist mit dem Knoten 759 gekoppelt. Durch das Verhältnis R3:R5 wird das Verhältnis eingestellt, um das der Strom durch die Darlington-Stufe größer ist als der kleinere Strom durch den Spannungsteiler aus R1, R2, D5, D6, D7 und R3. Somit ist der Darlington-Strom proportional zur Spannung zwischen den Knoten 703 und 704, wodurch der durch die gesamte Schaltung fließende Strom im Wesentlichen proportional zur Netzwechselspannung 701 gerät. Die Spannungsausgleichslängsimpedanz 12 könnte auch als sogenannte Konstantstromquelle oder im einfachsten Fall sogar als Induktivität oder als ohmscher Widerstand ausgeführt sein, wobei dann auf den Spannungsteiler aus R1, R2, D5, D6, D7 und R3 verzichtet werden kann.

Zwischen die Knoten 703 und 704 ist eine Serienschaltung von vorliegend drei LED-Einheiten LE1, LE2, LE3 sowie der Spannungsausgleichslängsimpedanz 12 gekoppelt. Der Aufbau einer LED-Einheit wird nachfolgend am Beispiel der LED-Einheit LE3 dargestellt, wobei der Aufbau der LED-Einheiten LE1, LE2 im Wesentlichen identisch ist, sich lediglich durch die Anzahl der jeweiligen LEDs und der sich daraus ergebenden Dimensionierung der Bauelemente unterscheidet.

Die LED-Einheit LE3 umfasst die LEDs D300 bis D313, demnach vierzehn LEDs, die seriell zueinander geschaltet sind und eine LED-Kaskade bilden. Seriell zu der LED-Kaskade ist eine Diode D33 gekoppelt, wobei der Kopplungspunkt der Diode D33 und der LED-Kaskade einen ersten Knoten N31 darstellt, an dem die Kathode der Diode D33 angeschlossen ist. Der nicht mit der Diode D33 gekoppelte Anschluss der LED-Kaskade stellt einen zweiten Knoten N32 dar, der im Weiteren auch mit "Ausgang der LED-Einheit" oder "Ausgangsknoten der LED-Einheit" bezeichnet sein kann. Der nicht mit der LED-Kaskade gekoppelte Anschluss der Diode D33, also ihre Anode, stellt einen dritten Knoten N33 dar, der im Weiteren auch mit "Eingang der LED-Einheit" oder "Eingangsknoten der LED-Einheit" bezeichnet sein kann. Parallel zur LED-Kaskade kann ein optionaler Kondensator C33 gekoppelt sein, der auch als Pufferkondensator bezeichnet sein kann. Zwischen den Knoten N33 und einen vierten Knoten N34 ist die Serienschaltung eines Kondensators C32 und einer Diode D32 gekoppelt, wobei der Kopplungspunkt des Kondensators C32 mit der Diode D32 einen fünften Knoten N35 darstellt, mit dem die Anode der Diode D32 verbunden ist. Vorliegend sind die zweiten und vierten Knoten N32 und N34 identisch.

Die LED-Einheit LE3 umfasst weiterhin zwei elektronische Schalter Q31 und B31, wobei die Steuerelektrode des Schalters Q31 über die Serienschaltung einer Diode D31 und eines ohmschen Widerstands R31 mit einem Knoten N6 gekoppelt ist. Die Bezugselektrode dieses Schalters Q31 ist mit dem Knoten N35 gekoppelt, während seine Arbeitselektrode über einen ohmschen Widerstand R32 mit der Steuerelektrode des Schalters B31 gekoppelt ist. Die Bezugselektrode des Schalters B31 ist mit dem Knoten N33 gekoppelt, während seine Arbeitselektrode mit dem Knoten N32 gekoppelt ist: Die Ausgangsseite des Schalters B31 zwischen seiner Arbeits- und seiner Bezugselektrode entspricht exakt der Strecke zwischen Eingangs- und Ausgangsknoten der zugehörigen LED-Einheit. An den Ausgang einer höhergelegenen als der tiefstgelegenen LED-Einheit ist immer der Eingang der direkt darunter liegenden LED-Einheit gekoppelt, an den Ausgang der tiefstgelegenen LED-Einheit die Spannungsausgleichslängsimpedanz, und schließlich an den Eingang der höchstgelegenen LED-Einheit der Knoten 703.

Im vorliegenden Ausführungsbeispiel ist der Schalter B31 als Darlington-Stufe realisiert und umfasst die Transistoren Q32 und Q33 sowie die ohmschen Widerstände R33 und R34. Anstelle der Darlington-Stufe kann jedoch insbesondere auch ein einzelner Transistor vorgesehen sein.

Die LED-Einheiten LE2, LE1 sind vergleichbar aufgebaut, umfassen jedoch jeweils eine unterschiedliche Anzahl an LEDs. Selbstverständlich können darüber hinaus weitere LED-Einheiten vorgesehen sein. Vorliegend umfasst die LED-Einheit LE2 die LEDs D200 bis D227, d.h. 28 LEDs, und die LED-Einheit LE1 umfasst die LEDs D100 bis D155, also 56 LEDs. Wie deutlich zu erkennen ist, verdoppelt sich die Anzahl der LEDs ausgehend von der tiefstgelegenen LED-Einheit LE3 bis zur höchstgelegenen LED-Einheit LE1 von LED-Einheit zu LED-Einheit.

Der zweite Knoten der tiefstgelegenen LED-Einheit LE3, vorliegend der Knoten N32 (bzw. N34), ist mit der Arbeitselektrode der als Linearregler wirkenden Spannungsausgleichslängsimpedanz 12 gekoppelt, während der dritte Knoten N13 der höchstgelegenen LED-Einheit LE1 mit dem Knoten 703 gekoppelt ist. Zwischen den Knoten N6 und den Knoten 704 ist eine Gleichspannungsquelle 14 gekoppelt, auf die weiter unten noch näher eingegangen wird.

Beispielhaft weist die in Fig. 1a dargestellte Schaltungsanordnung die folgenden Bauteile bzw. Dimensionierungen auf: R1=75 kΩ, R2=500 kΩ, R3=2,5 kΩ, R5=10 Ω, R11=200 kΩ, R21=100 kΩ, R31=50 kΩ, R12=1 mΩ, R22=500 kΩ, R32=250 kΩ, R13=R23=R33=10 kΩ, R14=R24=R34=1 kΩ, C12=470 nF, C22=1 µF, C32=1 µF, C13=22 µF, C23=47 µF, C33=100 µF, R4=5 kΩ, C2=22 µF.

Die Kondensatoren C13, C23, C33 sind vergleichsweise groß dimensioniert und dienen als Pufferkondensator für die LEDs der jeweiligen LED-Kaskade. Hierbei ist es von Vorteil, dass diese Kondensatoren lediglich für die an der entsprechenden LED-Kaskade abfallende Spannung und damit nicht für die volle Höhe der Netzwechselspannung 701 ausgelegt werden müssen. Entsprechend können diese Kondensatoren kleiner und damit Platz sparender ausgeführt sein.

Die Dioden D11, D21, D31 sind optional und können eingespart werden, wenn die Transistoren Q11, Q21, Q31 entsprechend spannungsfest ausgelegt sind.

Innerhalb des Spannungsteilers ist die Diode D7 optional, die Dioden D5 und D6 dienen dazu, die Basis-Emitter-Spannung der Transistoren Q1 und Q2 zu kompensieren. Die am ohmschen Widerstand R3 abfallende Spannung entspricht daher im Wesentlichen der Spannung, die über dem ohmschen Widerstand R5 abfällt. Der Strom durch den Widerstand R5 ist demnach halbsinusförmig. Daraus folgt, dass der Strom durch die Schaltungsanordnung der Eingangsspannung folgt, wodurch sich ein guter Powerfaktor ergibt sowie geringe EMV-Störungen.

Durch die Dimensionierung der in Fig. 1a gezeigten Schaltungsanordnung kann erreicht werden, dass der Schalter B11 in einem Beispiel mit einer Schaltfrequenz von ca. 100 Hz betrieben wird. Ein aufgrund dieser Schaltfrequenz unter Umständen wahrnehmbares Flickern wird durch den zugeordneten Pufferkondensator C13 verhindert. Der Schalter B21 arbeitet beispielsweise mit einer Schaltfrequenz von ca. 200 Hz, der Schalter B31 beispielsweise mit einer Schaltfrequenz von ca. 400 Hz.

Die Kombination aus dem Kondensator C12 und der Diode D12 stellt einen Spitzenwertdetektor für die LED-Einheit LE1 umfassend die LED-Kaskade mit den LEDs D100 bis D155 dar. Entsprechend stellen der Kondensator C22 und die Diode D22 einen Spitzenwertdetektor für die LED-Einheit LE2 und der Kondensator C32 und die Diode D32 einen Spitzenwertdetektor für die LED-Einheit LE3 dar.

Die Transistoren Q11, Q21 und Q31 agieren als Komparatoren. Die Funktionsweise wird nachfolgend beispielhaft anhand der tiefstgelegenen LED-Einheit LE3 beschrieben.

Der Widerstand R32 ist in Kombination mit dem Kondensator C32 so ausgelegt, dass der Kondensator C32 auch während der längsten zu erwartenden Einschaltphase des Schalters B31 nur gering entladen wird. Die Spannungsquelle 14 gibt einen Spannungsoffset als minimale Spannung vor, beispielsweise in Höhe von 6V, die eine ausreichende Arbeitsspannung für die Spannungsausgleichslängsimpedanz 12 garantieren soll. Der Transistor Q31 vergleicht die Spannung 6V mit der Spannung am Knoten N35. Ist der Schalter B31 durchgeschaltet, so sind die LEDs D300 bis D313 und ihre Seriendiode D33 überbrückt, können aber trotzdem aus dem Pufferkondensator C33 in dieser Phase weiterversorgt werden. Dennoch ist die LED-Einheit LE3 nach außen hin kurzgeschlossen. Deshalb hat der Knoten N35 das Potenzial von N33 reduziert um die Spannung über dem Kondensator C32, die der Flussspannung der LEDs D300 bis D313 entspricht. In dieser Phase leitet die Diode D32 nicht. Erst wenn das Potenzial am Knoten N33, also am Eingang von LE3, und damit auch die Spannung über der Spannungsausgleichslängsimpedanz 12 höher wird als die Flussspannung aller von LE3 umfassten LEDs vergrößert um den Spannungsoffset der Spannungsquelle 14, wird der Komparator Q31 hochohmig, weshalb auch der damit gekoppelte elektronische Schalter B31 sofort ausschaltet. Gepuffert durch den Kondensator C32 und gestützt durch das harte Potenzial am Knoten N33 bleibt das Potenzial am Knoten N35 von diesem Ausschaltvorgang unbeeinflusst, lediglich D32 wird leitfähig und lädt den Kondensator C32 nach. Die Spannung zwischen den Knoten N33 und N32 jedoch springt schlagartig auf die Flussspannung der LEDs der betrachteten Einheit, weshalb sich die Spannung über der Spannungsausgleichslängsimpedanz 12 ebenso schlagartig entsprechend reduziert. Der Sinn des Spannungsoffsets besteht also darin, auch direkt nach einem solchen Ausschaltvorgang sicherzustellen, dass die Spannungsausgleichslängsimpedanz 12 nicht unkontrolliert hochohmig wird und das ganze System kurzzeitig ausschaltet, womit auch die eben beschriebene Logik konterkariert wäre. Jeder Schaltvorgang eines der zweiten elektronischen Schalter B11, B21 oder B31 verschiebt nicht nur den Arbeitspunkt der Spannungsausgleichslängsimpedanz 12, sondern auch die Arbeitspunkte der verbleibenden Ansteuereinheiten für die gerade nicht betrachteten LED-Einheiten.

Zur Funktionsweise: Als Einschaltzeitpunkt wird im Nachfolgenden der Beginn einer Halbwelle der Wechselspannungsquelle 701 angenommen. Weiterhin wird angenommen, dass alle Schalter der LED-Einheiten, d.h. die Schalter Q11, B11, Q21, B21, Q31, B31, leitend sind und alle Kondensatoren geladen (eingeschwungener Zustand). Die Flussspannung einer LED wird zu 3V angenommen, die einer Diode und einer Transistor-Basis-Emitter-Strecke jeweils zu 0,7V.

Infolge der leitenden Schalter liegt die momentane Ausgangsspannung von Knoten 703 des Gleichrichters 702 auch am Knoten N32 an. Die Knoten N32 und N33 liegen auf demselben Potential, da die Schalter Q31 und B31 leitend angenommen wurden. Die von der Gleichspannungsquelle 14 an den Knoten N6 bereitgestellte Spannung werde im Ausführungsbeispiel zu 6V angenommen.

Der Kondensator C32 sei zu Beginn der Halbwelle aus dem vorherigen Zyklus auf +42V aufgeladen. Diese 42V ergeben sich aus den Flussspannungen der 14 Dioden D300 bis D313, wobei jede Flussspannung, wie oben erwähnt, zu 3V angenommen wird. Somit ergibt sich am Knoten N35 ein Potential von -42V.

Das Potenzial des Knotens N6 ist durch die Gleichspannungsquelle 14 auf 6V angehoben. Dadurch ergibt sich ein Stromfluss durch die Diode D31, den Widerstand R31 sowie den Transistor Q31. Der Transistor Q31 ist leitend, da durch seine Basis ein Strom fließt, begrenzt durch R31 und getrieben durch die Spannungsdifferenz von etwa 48V aus einem Potential von ca. 6V an der Basis und einem Potential von etwa -42V an seinem Emitter. Dadurch, dass der Transistor Q31 leitend ist, ist auch der Schalter B31 leitend. Der Strom fließt demnach an der LED-Kaskade der LED-Einheit LE3 vorbei, d.h. die LED-Kaskade ist nach außen hin kurzgeschlossen und derzeit nicht versorgt. Sie kann aus dem Pufferkondensator C33 heraus dennoch bestromt sein. Vereinbarungsgemäß sind auch die Schalter B21 und B11 leitend, sodass die LED-Kaskaden der LED-Einheiten LE1 und LE2 ebenso gerade nicht versorgt, also nach außen hin kurzgeschlossen sind. Diese Situation stellt den Ausgangspunkt einer Halbwelle der gleichgerichteten Netzwechselspannung 701 dar.

Im weiteren Verlauf der Halbwelle steigt das Potential der Halbwelle an. Aufgrund des damit anwachsenden Potentials am Knoten 759 beginnt die als Linearregler arbeitende Spannungsausgleichslängsimpedanz 12 allmählich leitend zu werden.

Solange die Schalter Q31 und B31 leitend sind, ist das Potential am Knoten N33 gleich dem Potential am Knoten N32. Im weiteren Verlauf der Halbwelle steigt das Potential am Knoten N33 so lange, bis das Potential am Knoten N35 etwa 4,6V beträgt (Potential am Knoten N6 minus der Flussspannung der Diode D31 minus U_{BE} von Q31). Dadurch, dass im Kondensator C32 42V gespeichert sind, ist dies demnach dann der Fall, wenn das Potential am Knoten N32 46,6V beträgt. Zu diesem Zeitpunkt gehen die Schalter Q31 und B31 in den sperrenden Zustand, d.h. die Potentiale an den Knoten N33 und N32 werden entkoppelt. Das Potential am Knoten N33 bleibt bei 46,6V, was immer noch auch dem Potenzial des Knotens 703 entspricht. Das Potenzial des Knotens N32 beginnt aufgrund der Leitfähigkeit der Spannungsausgleichslängsimpedanz 12 und des Ausschaltens des Schalters B31 zu fallen.

Da die Spannungsausgleichslängsimpedanz 12 aufgrund einer entsprechenden Ansteuerung durch den Spannungsteiler den Stromfluss durch den ohmschen Widerstand R5 entsprechend der Vorgabe des Spannungsteilers aufrechterhalten will, wird sie zunehmend leitend geschaltet, wodurch das Potential am Knoten N32 so lange sinkt, bis der Sollstrom eingestellt ist. Dies ist der Fall, wenn die Spannung am Knoten N32 bis auf 3,9V abgesunken ist. Dieser Wert folgt aus dem Potential am Knoten N33, das, siehe oben, nach dem Sperrend-Schalten der Schalter Q31 und B31 46,6V beträgt, minus 14-mal die Diodenflussspannung von 3V, minus 0,7V für die Flussspannung der Diode D33. Damit ist die Voraussetzung geschaffen, dass der Strom über die LED-Kaskade der LED-Einheit LE3 fließt, weshalb ab diesem Zeitpunkt diese Kaskade leuchtet (sofern der optionale Kondensator C33 fehlt; ist er vorhanden, ist dessen Ladung zu berücksichtigen). Allgemeiner formuliert wird ab dann die Parallelschaltung aus dem Pufferkondensator C33 und der zugehörigen LED-Kaskade mit Energie versorgt.

Im weiteren Verlauf der Halbwelle steigt die Spannung zwischen den Knoten 703 und 704 weiter an, wodurch das Potential am Knoten N33 entsprechend weiter anwächst. Über die leitenden LEDs D300 bis D313 steigt damit auch das Potential am Knoten N32 an. Die Spannungsdifferenz zwischen dem Potential am Knoten N33 und am Knoten N32 beträgt 47,3V - 4,6V = 42,7V, oder einfacher ausgedrückt (14*3 + 0,7)V = 42,7V. Der Kondensator C22 ist auf 28*3V=84V aufgeladen (die Flussspannung der 28 Dioden D200 bis D227).

Steigt die gleichgerichtete Wechselspannung auf 60V, liegen diese 60V am Knoten N23 an, da alle darüber liegenden Schalter Q11, B11 leitend geschaltet sind. Die Spannung am Knoten N25 beträgt daher 60V - 84V = -24V. Da die Spannung am Knoten N6 konstant 6V beträgt, sind die Schalter Q21 und B21 leitend, die Potenziale der Knoten N22, N24, N33 ergo niederohmig an das von N23 gekoppelt. Bei weiter steigender Eingangsspannung erhöht sich das Potential am Knoten N23 und damit das Potential am Knoten N24. Wenn das Potential am Knoten N25 4,6V erreicht hat (Potential am Knoten N6 minus der Flussspannung der Diode D21 minus U_{BE} von Q21), geht der Schalter Q21 und damit der Schalter B21 in den sperrenden Zustand über. Dies ist dann der Fall, wenn das Potential am Knoten N23 88,6V erreicht hat (4,6V am Knoten N33 plus 28 mal 3V). Ab diesem Zeitpunkt beginnt der Strom über die LED-Kaskade D200 bis D227 der LED-Einheit LE2 zu fließen, bzw. die Parallelschaltung aus LED-Kaskade D200 bis D227 und Pufferkondensator C23 wird mit Energie versorgt. Bei einer Eingangsspannung von 88,6V fallen damit von außen gesehen an der LED-Einheit LE2 28 mal 3V plus 0,7V (die Flussspannungen der 28 LEDs D200 bis D227 sowie die Flussspannung der Diode D23) ab, sodass das Potential am Knoten N22 nur mehr 3,9V beträgt. Da der Knoten N22 dem Knoten N33 entspricht, beträgt damit auch das Potential am Knoten N33 lediglich noch 3,9V. Das Potential am Knoten N35 beträgt demnach 3,9V - 42,0V (entsprechend dem Potential am Knoten N33 abzüglich der im Kondensator C32 gespeicherten Spannung) = -38,1V. Damit beträgt die Spannungsdifferenz zwischen dem Knoten N6 und dem Knoten N35 -44,1V, wodurch der Transistor Q31 und damit der Schalter B31 wieder leitend werden. Auf diese Weise wird die LED-Kaskade D300 bis D313 der LED-Einheit LE3 von außen wieder kurzgeschlossen, d.h. sie wird nicht mehr mit Energie versorgt.

In entsprechender Weise werden die LED-Kaskaden der LED-Einheiten LE2 und LE1 mit Energie versorgt - die entsprechenden Schaltphasen sind in untenstehender Tabelle mit "1" gekennzeichnet - oder von außen kurzgeschlossen, was im folgenden mit "0" gekennzeichnet ist.

| Schaltvorgang | LE1 | LE2 | LE3 |
|---|---|---|---|
| 1 | 0 | 0 | 0 |
| 2 | 0 | 0 | 1 |
| 3 | 0 | 1 | 0 |
| 4 | 0 | 1 | 1 |
| 5 | 1 | 0 | 0 |
| 6 | 1 | 0 | 1 |
| 7 | 1 | 1 | 0 |
| 8 | 1 | 1 | 1 |
| 9 | 1 | 1 | 1 |
| 10 | 1 | 1 | 0 |
| 11 | 1 | 0 | 1 |
| 12 | 1 | 0 | 0 |
| 13 | 0 | 1 | 1 |
| 14 | 0 | 1 | 0 |
| 15 | 0 | 0 | 1 |
| 16 | 0 | 0 | 0 |

Die Schaltvorgänge 1 und 9 aus obiger Tabelle sind keine echten Schaltvorgänge, was an der jeweiligen Zustandsgleichheit der Schaltvorgänge 16 und 8 erkennbar ist. Vielmehr werden damit wichtige Zeitpunkte der am Eingang der Gesamtschaltung anliegenden, gleichgerichteten Netzspannung dargestellt: Der Übergang von 16 auf 1 kennzeichnet das Minimum der Eingangsspannung zum Zeitpunkt des Netznulldurchgangs, bei dem sich kein Schaltzustand ändert, aufgrund der sich sprunghaft ändernden Steigung jedoch die Logik sehr wohl. Gleiches gilt für den Übergang 8 auf 9, der das Maximum der Eingangsspannung beschreibt. Danach setzt der umgekehrte Effekt ein, d.h. es werden nacheinander in genau umgekehrter Reihenfolge die LED-Kaskaden der LED-Einheiten LE1, LE2 und LE3 entsprechend der obigen Tabelle geschaltet, bis bei einem Phasenwinkel von 180° wieder alle LED-Kaskaden überbrückt sind (B11 bis B31 leitend) und eine neue Halbwelle beginnt. Bei abfallender momentaner Versorgungsspannung tritt beispielsweise häufig der Fall auf, dass eine höhere LED-Einheit überbrückt wird und dadurch die direkt darunterliegende danach wieder mit Energie versorgt wird.

Zur Erzeugung einer Hilfsspannung für den Knoten N6 wird vorliegend der Spannungsabfall an der Spannungsausgleichslängsimpedanz 12, d.h. die Spannung am Knoten N32, genutzt. Aufgrund der binären Auslegung der LED-Kaskaden wird dort eine sägezahnähnliche Spannung abgreifbar, die zwischen 3,9V (bei jedem Netznulldurchgang 0V) und 46,6V schwankt, bis alle LED-Kaskaden zugeschaltet sind. Sind alle LED-Kaskaden aktiviert, also während der obigen Schaltphasen 8 und 9, fällt an der Spannungsausgleichslängsimpedanz 12 eine Spannung ab, die sich aus der Differenz der Eingangsspannung und der Summe der über den LED-Kaskaden abfallenden Spannungen und der Summe der Flussspannungen der Entkoppeldioden ergibt. Da die Spannungsspitzen dieser sägezahnähnlichen Spannung innerhalb einer Halbwelle zeitlich gut verteilt sind, kann diese sägezahnähnliche Spannung verwendet werden, um mittels eines RC-Glieds R4, C2 sowie einer Ladediode D3 und einer Zenerdiode D2 als Spannungsbegrenzer eine Hilfsspannung zu erzeugen. Diese Hilfsspannung hat lediglich eine geringe Restwelligkeit, weshalb im Vergleich zu anderen Hilfsspannungsversorgungen sehr kleine Kapazitäten verwendet werden können. Sie ist sehr einfach aufgebaut und kompakt zu realisieren, also überaus kostengünstig. Von besonderem Vorteil ist der Umstand, dass für die Hilfsspannungsversorgung ein Strom entnommen wird, der sonst in der Spannungsausgleichslängsimpedanz 12 in Verlustleistung umgewandelt würde. Folglich wird eine parasitäre Leistung zur Erzeugung der Hilfsspannung am Knoten N6 genutzt. Auf diese Weise entsteht durch die Hilfsspannungsversorgung keine zusätzliche Verlustleistung, der Wirkungsgrad der Schaltungsanordnung wird verbessert.

Nachteilig an der in Fig. 1a dargestellten Schaltungsanordnung ist der Umstand, dass sich dadurch in unerwünschter Weise hellere und dunklere Flächen in einer Leuchte ergeben. Um eine Beeinträchtigung des Erscheinungsbildes einer LED-Anordnung zu vermeiden wird in diesem Zusammenhang von der DE 20 2013 000 064 U1 eine LED-Anordnung mit mindestens einer ersten und einer zweiten LED-Kette vorgeschlagen, wobei die LEDs zumindest zum Teil auf mindestens einer ersten Anordnungsfläche angeordnet sind, und wobei die LEDs der mindestens einen ersten und zweiten LED-Kette in Abhängigkeit ihrer mittleren Stromstärken nach einem vorgegebenen Kriterium angeordnet sind. Nachteilig an einer derartigen Anordnung ist jedoch eine deutlich komplexere Leiterbahnführung, was insbesondere im Hinblick auf die Erfüllung der Vorschriften bezüglich der elektromagnetischen Verträglichkeit (EMV) Schwierigkeiten bereiten kann, sowie eine geringe Flexibilität bei einer Anpassung an geänderte Schaltungsparameter.

### Darstellung der Erfindung

Die Aufgabe der vorliegenden Erfindung besteht deshalb darin, eine eingangs genannte Schaltungsanordnung derart weiterzubilden, dass eine möglichst gleichmäßige Leuchtdichte bei einem geringen schaltungstechnischen Aufwand ermöglicht wird.

Diese Aufgabe wird gelöst durch eine Schaltungsanordnung mit den Merkmalen von Patentanspruch 1.

Der vorliegenden Erfindung liegt die Erkenntnis zugrunde, dass es bei der aus dem Stand der Technik bekannten Schaltungsanordnung zu helleren und dunkleren Flächen in einer Leuchte dadurch kommt, dass durch die in Reihe geschalteten LEDs der unterschiedlichen LED-Kaskaden unterschiedliche durchschnittliche Ströme fließen. Dieser Nachteil lässt sich zwar bis zu einem gewissen Maß aufheben, wenn die LEDs der verschiedenen Kaskaden miteinander vermischt werden oder die LEDs zueinander verschiedene Abstände einnehmen, um eine möglichst gleichmäßige Leuchtdichte zu erreichen. Dies resultiert jedoch in einem hohen Layout-Aufwand. In Leuchten bzw. LED-Modulen, in denen keine optimierte Anordnung der LEDs geschweige denn deren Mischung möglich ist, war der Betrieb der aus dem Stand der Technik bekannten Schaltungsanordnung bisher ausgeschlossen. Ebenso mussten in Teilen der Schaltung teurere LEDs verwendet werden, die für die maximal fließenden Ströme ausgelegt sind. Aus Kostengründen wurden nur in der LED-Einheit mit dem höchsten mittleren und somit auch höchsten maximalen Strom die LEDs verbaut, die für die höheren Ströme geeignet sind. In einer aus dem Stand der Technik bekannten Schaltungsanordnung konnten deshalb nur dann einheitliche LEDs eingesetzt werden, wenn diese auf den maximal fließenden Strom dimensioniert wurden. Dies resultiert in unerwünscht hohen Kosten aufgrund von Überdimensionierung in weniger als der Hälfte aller LEDs der betrachteten Schaltung.

Die vorliegende Erfindung basiert auf der überraschenden Erkenntnis, dass es trotz der von vornherein einer gleichmäßigen Helligkeitsverteilung entgegenwirkenden Auslegung einer gattungsgemäßen Schaltungsanordnung gemäß der DE 10 2013 201 439 A1, bei der ein der Netzspannungsform entsprechender sinusförmiger Verlauf des Stroms durch die LED-Einheiten eingestellt wird und somit der durch die jeweilige LED-Kaskade fließende Strom erheblich von der Lage der Einschaltphase der jeweilige LED-Kaskade innerhalb einer Netzhalbwelle abhängt, möglich ist, mit einem geringen schaltungstechnischen Aufwand den Strom in allen Kaskaden aufeinander anzupassen, d.h. einen weitgehend identischen Mittelwert einzustellen, wenn die jeweiligen Einschaltzeitpunkte der Schaltstufen in geeigneter Weise verändert werden. Die Einschaltzeitpunkte sind abhängig von der Spannung an den Spitzenwertdetektoren C12, C22 und C32. Diese Spannung entspricht der LED-Vorwärtsspannung bzw. der Spannung an den Kondensatoren C13, C23 und C33. Dementsprechend muss für eine Veränderung der Einschaltzeitpunkte die Spannung an den Spitzenwertdetektoren verändert werden.

Dies wird erfindungsgemäß durch die Entkopplung der Kathode zumindest der Dioden D12, D22 vom negativen Anschluss des entsprechenden Kondensators C13, C23 bzw. vom Ausgangsknoten N12 und N22 der jeweiligen LED-Einheit und durch Hinzufügen eines entsprechenden Spannungsoffsets erreicht. Damit liegt beispielsweise am Spitzenwertdetektor C12 die Spannung am Kondensator C13 plus eine OffsetSpannung an. Diese Spannung am Spitzenwertdetektor C12 wird für den Einschaltzeitpunkt verwendet. Folglich schaltet nun die längste Kaskade erst später ein und es fließt weniger Strom durch die LEDs in der längsten Kaskade. Wird die mittlere LED-Einheit auch entsprechend angepasst, ist es möglich, die Einschaltzeitpunkte so zu verändern, dass in allen LED-Kaskaden ein annähernd identischer mittlerer Strom fließt. Eine entsprechende Erweiterung der tiefstgelegenen LED-Einheit ist optional, da in ihr ohnehin der niedrigste mittlere LED-Strom fließt, d.h. eine Anpassung ist insbesondere bei den höhergelegenen LED-Einheiten nötig.

Wenngleich vorliegend die Erfindung der besseren Verständlichkeit halber an einem Ausführungsbeispiel mit drei LED-Einheiten dargestellt wird, ist sie selbstverständlich auf Schaltungsanordnungen mit mehr oder weniger LED-Einheiten anwendbar.

Erfindungsgemäß ist deshalb vorgesehen, dass jedenfalls in den LED-Einheiten, die nicht die tiefstgelegene LED-Einheit darstellen, der vierte Knoten einen Knoten der Schaltungsanordnung darstellt, der zumindest während einer vorgebbaren Zeitdauer während des Betriebs der Schaltungsanordnung auf einem tieferen Potential liegt als der jeweilige Ausgangsknoten bzw. zweite Knoten der jeweiligen LED-Einheit.

Auf diese Weise wird erreicht, dass jede LED der Schaltungsanordnung im Wesentlichen von einem weitgehend identischen durchschnittlichen Strom durchflossen wird und damit eine nahezu gleiche Lichtmenge emittiert. Dadurch wird die Realisierung ringförmiger, flächiger und linearer Module ermöglicht. Es vereinfacht die LED-Auswahl erheblich und ermöglicht auch die Verwendung kostengünstigerer LED-Typen, v. a. gleicher LED-Typen in allen LED-Einheiten einer ganzen betrachteten Schaltung.

Eine bevorzugte Ausführungsform zeichnet sich dadurch aus, dass die Schaltungsanordnung weiterhin einen Spannungsteiler umfasst, der zwischen den ersten und den zweiten Eingangsanschluss gekoppelt ist, wobei die Spannungsausgleichslängsimpedanz als Linearregler ausgebildet ist, wobei der Abgriff des Spannungsteilers mit dem Eingang des Linearreglers gekoppelt ist.

Bevorzugt umfasst jede LED-Einheit weiterhin einen zweiten Kondensator, der der jeweiligen LED-Kaskade parallel geschaltet ist. Durch diese Maßnahme wird die jeweilige LED-Kaskade auch in den Phasen, in denen die gleichgerichtete Netzwechselspannung unter die Flussspannungen der LEDs einer jeweiligen Kaskade absinkt, mit Energie versorgt.

Bevorzugt liegt der jeweilige vierte Knoten jedenfalls dann auf einem tieferen Potential als der jeweilige zweite Knoten, wenn sowohl der erste als auch der zweite elektronische Schalter der jeweiligen LED-Einheit nicht leiten und somit über dem zweiten elektronischen Schalter mindestens eine Spannung ansteht, die der Flussspannung der von ihr umfassten Kaskade von LEDs entspricht. Auf diese Weise wird erreicht, dass der Spitzenwertdetektor der betrachteten LED-Einheit immer mindestens auf ihre Flussspannung aufgeladen ist, aber vergrößert um einen Wert, der sich aus der Flussspannung der LEDs der darunterliegenden LED-Einheit ergibt, die mit dem PWM-artigen Ausschaltmuster der betrachteten LED-Einheit gewichtet wird. In einer anderen Ausführungsform werden nur Bruchteile der Flussspannung der darunterliegenden LED-Einheit zum Gewichten herangezogen. In wieder einer anderen Ausführungsform geschieht die Gewichtung nur dann, wenn der erste und der zweite elektronische Schalter sowohl der betrachteten als auch der direkt darunter liegenden LED-Einheit jeweils nicht leiten. Eine Kombination dieser beiden anderen Ausführungsformen ist ebenso möglich.

Zur Umsetzung dieser Maßnahmen sind unterschiedliche Ansätze denkbar: Bei einer ersten Variante umfassen jedenfalls die LED-Einheiten, die nicht die tiefstgelegene LED-Einheit darstellen, einen jeweiligen Spannungsteiler, der zwischen zwei Knoten der nächst tiefer gelegenen LED-Einheit gekoppelt ist, wobei der vierte Knoten den Abgriff des jeweiligen Spannungsteilers darstellt. In diesem Zusammenhang kann der jeweilige Spannungsteiler als ohmscher Spannungsteiler ausgebildet sein und der jeweiligen LED-Kaskade der nächst tiefer gelegenen LED-Einheit parallel geschaltet sein. Der jeweilige Spannungsteiler kann weiterhin als ohmscher Spannungsteiler ausgebildet sein und der Strecke Bezugselektrode-Arbeitselektrode des zweiten elektronischen Schalters der nächst tiefer gelegenen LED-Einheit parallel geschaltet sein. Weiterhin kann der jeweilige Spannungsteiler als ohmscher Spannungsteiler ausgebildet sein und dem ersten Kondensator der nächst tiefer gelegenen LED-Einheit parallel geschaltet sein. Alle diese Varianten, auch in beliebigen Kombinationen, ermöglichen eine geeignete Verschiebung des am tiefer gelegenen Anschluss des Spitzenwertdetektors vorliegenden Potentials wie geplant in negative Richtung.

Bevorzugt umfasst der jeweilige Spannungsteiler einen ersten, höher liegenden und einen zweiten, tiefer liegenden ohmschen Widerstand. Der erste, höher liegende Widerstand ist jeweils entweder mit der Bezugselektrode des zweiten elektronischen Schalters oder mit der Anode der ersten LED der Kaskade der betrachteten LED-Einheit verbunden. Mit umfasst ist jedoch auch, dass der Widerstandswert des ersten ohmschen Widerstands unendlich ist, d.h. durch einen Leerlauf realisiert ist. Dies resultiert in einer Ersparnis von Bauelementen sowie in einer Verbesserung des Wirkungsgrads. Der jeweilige, oben erwähnte Spannungsteiler kann jedoch auch durch die LEDs der nächst tiefer liegenden LED-Kaskade selbst gebildet sein. Insofern wird der Abgriff des Spannungsteilers, also besagter vierter Knoten der betrachteten LED-Einheit, an einen geeigneten Punkt zwischen zwei LEDs der nächst tiefer liegenden LED-Kaskade gekoppelt. Auf diese Weise kann die Erfindung ohne zusätzliche Bauelemente realisiert werden.

Gemäß einer anderen Realisierungsvariante umfassen ebenfalls die LED-Einheiten, die nicht die tiefstgelegene LED-Einheit darstellen, einen jeweiligen ohmschen Widerstand, dessen erster Anschluss mit dem zweiten Eingangsanschluss gekoppelt ist, wobei der vierte Knoten den zweiten Anschluss des jeweiligen ohmschen Widerstands darstellt. Bei einer weiteren Variante ist jedenfalls in den LED-Einheiten, die nicht die tiefstgelegene LED-Einheit darstellen, der vierte Knoten, bevorzugt über einen ohmschen Widerstand, mit dem sechsten Knoten gekoppelt. Auch bei diesen beiden Varianten lässt sich die am Spitzenwertdetektor anliegende Spannung in gewünschter Weise modifizieren.

Bevorzugt kann die Gleichspannungsquelle dadurch realisiert sein, dass die im Betrieb der Schaltungsanordnung am zweiten Knoten der tiefstgelegenen LED-Einheit auftretende Spannung zur Erzeugung einer Gleichspannung verwendet wird, wie dies bei der in Fig. 1a aus dem Stand der Technik bekannten Schaltungsanordnung der Fall ist. Die Gleichspannungsquelle umfasst bevorzugt eine Ladungspumpe, deren Eingang mit dem zweiten Knoten der tiefstgelegenen LED-Einheit gekoppelt ist und deren Ausgang mit dem sechsten Knoten aller LED-Einheiten gekoppelt ist.

Noch vorteilhafter ist es jedoch, wenn die Gleichspannungsquelle dadurch realisiert ist, dass die im Betrieb der Schaltungsanordnung am ersten Knoten der tiefstgelegenen LED-Einheit auftretende Spannung als Eingang besagter Ladungspumpe verwendet wird. Auf diese Weise kann eine Hilfsspannung mit einer höheren Amplitude bereitgestellt werden, sodass insbesondere im Dimm-Betrieb, beispielsweise bei Phasenanschnitts- oder -abschnittssteuerung, die Bereitstellung einer ausreichend großen Hilfsspannung am sechsten Knoten zuverlässig ermöglicht wird. Dies ist insbesondere dann gegeben, wenn die tiefstgelegene LED-Einheit einen Pufferkondensator C33 aufweist, der auch zu Zeiten eines "Dimmerausschnitts", also auch dann, wenn die Spannung über der Spannungsausgleichslängsimpedanz mangels Eingangsstroms völlig zusammengebrochen ist, Energie an die Gleichspannungsquelle abgibt. In diesem Fall ist die Spannung am ersten Knoten der tiefstgelegenen LED-Einheit immer höher als die am sechsten Knoten, und die Ladediode der Ladungspumpe kann entfallen und durch einen Kurzschluss oder einen weiteren ohmschen Widerstand ersetzt sein.

Bevorzugt umfassen die LED-Einheiten jeweils eine unterschiedliche Anzahl an LEDs, wobei bevorzugt jede höher gelegene LED-Einheit die doppelte Anzahl an LEDs umfasst wie die nächst niedriger gelegene LED-Einheit. Auf diese Weise wird eine optimale Ausnutzung der Netzwechselspannung und damit ein besonders hoher Wirkungsgrad ermöglicht.

Weitere vorteilhafte Ausführungsformen ergeben sich aus den abhängigen Ansprüchen.

### Kurze Beschreibung der Zeichnung(en)

Im Nachfolgenden werden nunmehr Ausführungsbeispiele der vorliegenden Erfindung unter Bezugnahme auf die beigefügten Zeichnungen näher beschrieben. Diese zeigen in:
- Fig. 1a: eine schematische Darstellung einer aus dem Stand der Technik bekannten Schaltungsanordnung;
- Fig. 1b: den zeitlichen Verlauf verschiedener Spannungen der Schaltungsanordnung von Fig. 1a;
- Fig. 1c: den zeitlichen Verlauf verschiedener Ströme der Schaltungsanordnung von Fig. 1a;
- Fig. 1d: den zeitlichen Verlauf weiterer Ströme der Schaltungsanordnung von Fig. 1a;
- Fig. 2a: in schematischer Darstellung ein erstes Ausführungsbeispiel einer erfindungsgemäßen Schaltungsanordnung;
- Fig. 2b: in schematischer Darstellung den zeitlichen Verlauf verschiedener Spannungen der Schaltungsanordnung von Fig. 2a;
- Fig. 2c: in schematischer Darstellung den zeitlichen Verlauf verschiedener Ströme der Schaltungsanordnung von Fig. 2a;
- Fig. 2d: in schematischer Darstellung den zeitlichen Verlauf weiterer Ströme der Schaltungsanordnung von Fig. 2a;
- Fig. 3: in schematischer Darstellung ein zweites Ausführungsbeispiel einer erfindungsgemäßen Schaltungsanordnung;
- Fig. 4: in schematischer Darstellung ein drittes Ausführungsbeispiel einer erfindungsgemäßen Schaltungsanordnung;
- Fig. 5: in schematischer Darstellung ein viertes Ausführungsbeispiel einer erfindungsgemäßen Schaltungsanordnung;
- Fig. 6: in schematischer Darstellung ein fünftes Ausführungsbeispiel einer erfindungsgemäßen Schaltungsanordnung;
- Fig. 7: in schematischer Darstellung ein sechstes Ausführungsbeispiel einer erfindungsgemäßen Schaltungsanordnung; und
- Fig. 8: in schematischer Darstellung ein siebtes Ausführungsbeispiel einer erfindungsgemäßen Schaltungsanordnung.

### Bevorzugte Ausführung der Erfindung

In den nachfolgenden Ausführungen sind gleiche und gleich wirkende Elemente mit denselben Bezugszeichen versehen. Sie werden der Übersichtlichkeit halber nur einmal eingeführt.

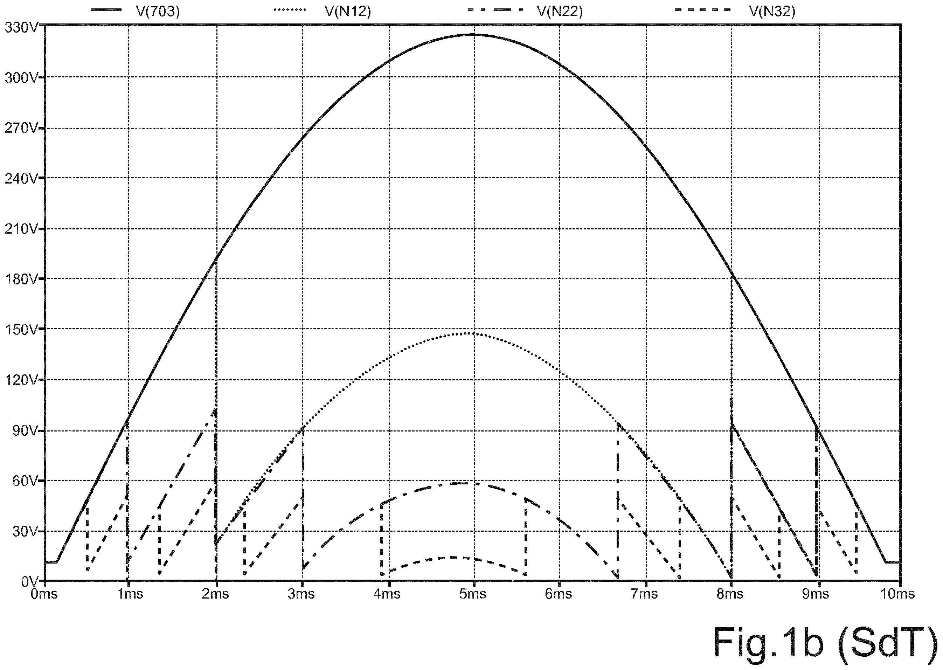

Der Aufbau sowie die Funktionsweise der in Fig. 1a dargestellten, aus dem Stand der Technik bekannten Schaltungsanordnung wurde weiter oben schon ausführlich erläutert. Fig. 1b zeigt die zeitlichen Verläufe der Spannungen an den Knoten 703, N12, N22 und N32 für die in Fig. 1a dargstellte Schaltungsanordnung. V(703) zeigt eine Netzhalbwelle. Wie zu erkennen ist, wird zum Zeitpunkt 0,5ms etwa eine Spannung von 45V erreicht und damit eine Spannung, die ausreichend ist, die LEDs der LED-Kaskade LE3 und ihren optional parallel geschalteten Pufferkondensator C33 mit Energie zu versorgen. Am Einbrechen des zeitlichen Verlaufs der Spannung V(N32) ist das Freigeben der dritten LED-Kaskade LE3 erkennbar. Mit einem weiteren Ansteigen der Netzspannung V(703) werden zum Zeitpunkt 1ms etwa 90V erreicht, wodurch eine Spannung erreicht ist, die ausreichend ist, die LED-Einheit LE2 mit Energie zu versorgen. Dies ist erkennbar am Einbrechen des zeitlichen Verlaufs der Spannung V(N22). Entsprechend geht auch die Spannung V(N32) wieder auf 0V zurück. Zum Zeitpunkt 1,3ms ist die Spannung ausreichend, dass zusätzlich zur LED-Einheit LE2 die LEDs der LED-Einheit LE3 mit Energie versorgt werden. Deshalb bricht die Spannung V(N32) zum Zeitpunkt 1,3ms wieder auf 0V zusammen. Mit einem weiteren Ansteigen der Netzspannung V(703) werden zum Zeitpunkt 2ms etwa 180V erreicht, die ausreichen, erstmals die LEDs der LED-Einheit LE1 mit Energie zu versorgen. Deshalb gehen zum Zeitpunkt 2ms sowohl die Spannungen V(N12), V(N22) als auch V(N32) auf 0V zurück.

Zum Zeitpunkt 2,3ms ist die Spannung ausreichend, dass zusätzlich zu den LEDs der LED-Einheit LE1 die LEDs der LED-Einheit LE3 mit Energie versorgt werden, erkennbar am Zusammenbrechen der Spannung V(N32). Zum Zeitpunkt 3ms werden die LEDs der LED-Einheit LE1 und LE2 mit Energie versorgt. Zum Zeitpunkt 3,9ms kommen weiterhin die LEDs der LED-Einheit LE3 dazu. Nach Überschreiten des Spitzenwerts der Netzspannungshalbwelle werden die LED-Kaskaden in umgekehrter Reihenfolge wie in der ersten Hälfte der Netzhalbwelle geschaltet. Zum Zeitpunkt 9,5ms wird keine der LED-Einheiten LE1, LE2, LE3 mehr mit Energie versorgt.

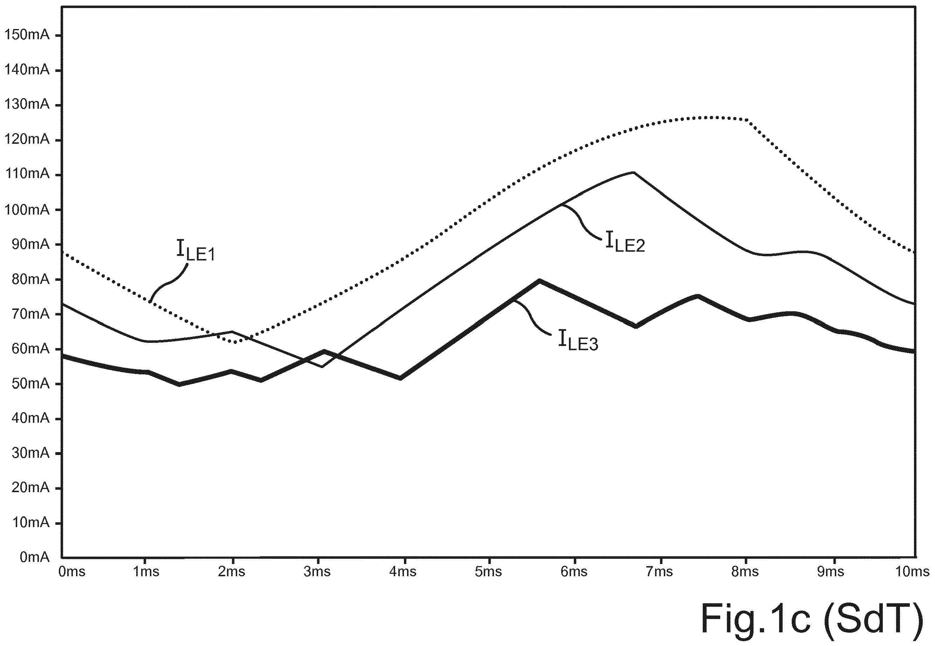

Fig. 1c zeigt die zeitlichen Verläufe der Ströme I(LE1), I(LE2) und I(LE3) durch die LEDs der Kaskaden der entsprechenden LED-Einheiten, denen jeweils Pufferkondensatoren parallel geschaltet sind, die die LEDs speisen, während die zugehörigen LED-Einheiten äußerlich kurzgeschlossen sind. Wie zunächst zu erkennen ist, führt ein Einschalten der entsprechenden LED-Kaskade, also deren Freigabe durch Ausschaltung des zugehörigen zweiten elektronischen Schalters, zu einem im Wesentlichen kontinuierlichen Ansteigen des entsprechenden Stroms bis zum jeweiligen Abschalten der jeweiligen LED-Kaskade durch äußeres Kurzschließen derselben mittels ihres zugehörigen zweiten elektronischen Schalters. Danach fällt der Strom durch die LEDs wieder kontinuierlich ab analog zur Energieabnahme im sie speisenden Pufferkondensator. Die LED-Kaskade der LED-Einheit LE1 wird demnach bei etwa 2ms eingeschaltet (vgl. hierzu auch Fig. 1b) und wird bei etwa 8ms ausgeschaltet. Die maximale Stromamplitude beträgt etwa 120 mA. Die LEDs der LED-Kaskade der LED-Einheit LE2 werden mit einem maximalen Strom von etwa 110 mA betrieben, während die LEDs der LED-Einheit LE3 mit einem maximalen Strom von etwa 80 mA betrieben werden. Insofern ergeben sich sehr deutliche Unterschiede in den Stromwerten, die in unterschiedlichen Helligkeiten, Temperaturen, Lebensdauern etc. einhergehen. Maßgeblich für die von einer jeweiligen LED-Kaskade abgegebene Lichtmenge ist der mittlere, sie durchfließende Strom; wie aus Fig. 1c deutlich hervorgeht, unterscheiden sich die Mittelwerte der entsprechenden Ströme deutlich voneinander, was in ebenso deutlich wahrnehmbaren Helligkeitsunterschieden resultiert.

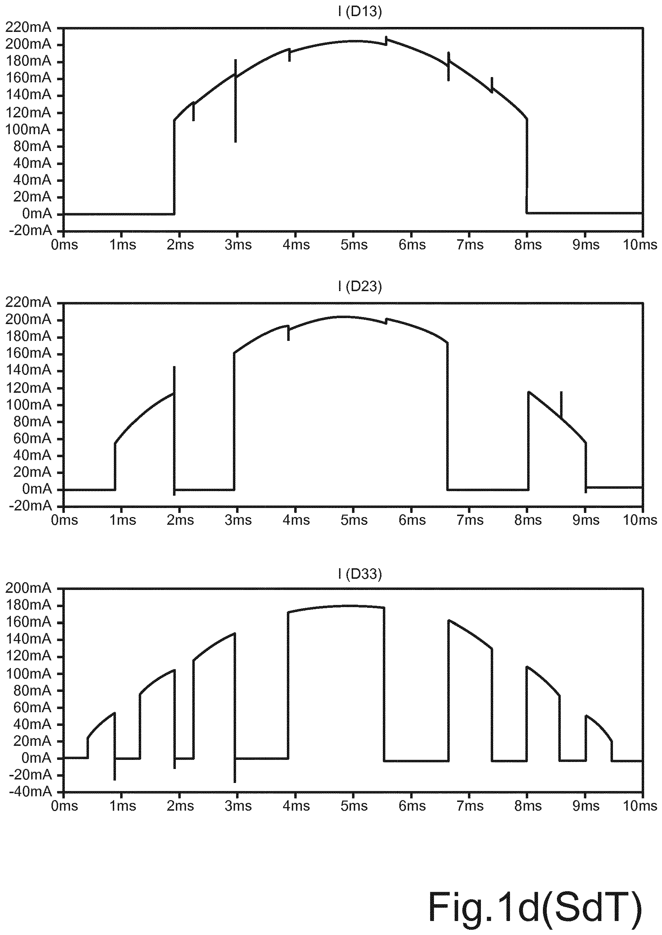

Fig. 1d zeigt die zeitlichen Verläufe der Ströme I(D13), I(D23), I(D33) durch die Dioden D13, D23 und D33 der in Fig. 1a dargestellten Schaltungsanordnung. Wie zu erkennen ist, korrespondieren die in Fig. 1d dargestellten Stromverläufe mit den Spannungsverläufen, die in Fig. 1b dargestellt sind. Insofern lässt sich aus Fig. 1d sehr deutlich ablesen, wann welche LED-Einheiten mit Energie versorgt werden und wann nicht. Immer dann, wenn der Stromfluss ungleich 0 mA ist, wird die jeweilige LED-Einheit mit Energie versorgt.

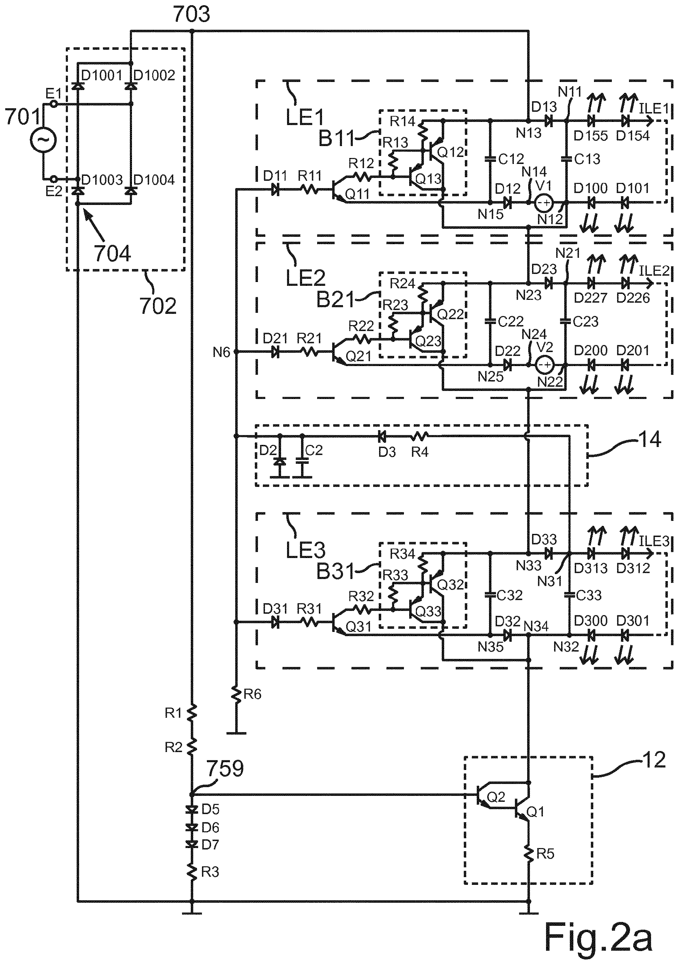

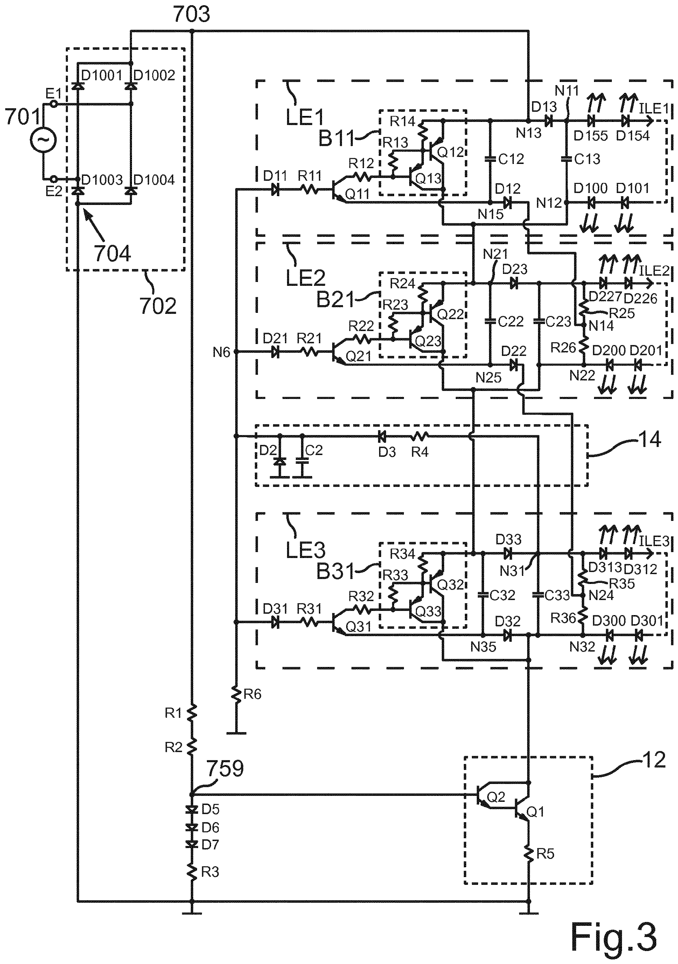

Fig. 2a zeigt ein erstes Ausführungsbeispiel einer erfindungsgemäßen Schaltungsanordnung, bei dem zur Veränderung der Einschaltzeitpunkte der LED-Kaskaden der LED-Einheiten LE1 und LE2 zwischen den Knoten N14 und N12 eine Spannungsquelle V1 und zwischen den Knoten N24 und N22 eine Spannungsquelle V2 schematisch zur Erklärung des der Erfindung zugrunde liegenden Prinzips eingefügt sind. Wenngleich die Einfügung expliziter Spannungsquellen ebenso das der Erfindung zugrunde liegende Problem lösen würde, wird man allerdings in der Praxis aus Kostengründen auf andere Realisierungen ausweichen, auf die mit Bezug auf die Fig. 3 bis 8 weiter unten noch näher eingegangen wird. Nichtsdestotrotz lässt sich das der Erfindung zugrunde liegende Prinzip recht anschaulich unter Bezugnahme auf Fig. 2a erörtern:
Wie bereits ausgeführt, sind die Einschaltzeitpunkte der jeweiligen LED-Kaskaden abhängig von der Spannung an den Spitzenwertdetektoren C12, C22 und C32. Diese Spannung entspricht im Stand der Technik der LED-Vorwärtsspannung bzw. der Spannung an den Pufferkondensatoren C13, C23 und C33. Um die Einschaltzeitpunkte erfindungsgemäß zu verschieben, muss daher die Spannung an den Spitzenwertdetektoren C12, C22, C32 in geeigneter Weise verändert werden. Dies wird vorliegend ermöglicht durch die Entkopplung der Kathoden D12, D22 vom negativen Anschluss des entsprechenden Pufferkondensators C13, C23 und Hinzufügen eines entsprechenden Spannungsoffsets. Dabei ist auf die eingezeichnete Polarität der Spannungen V1 und V2 zu achten:
Eine Verschiebung irgendwelcher Einschalt- bzw. Freigabezeitpunkte während einer "ansteigenden Viertelwelle" gegenüber dem Stand der Technik nach vorne, z.B. für die tiefst liegende LED-Einheit zwecks Stromerhöhung, ergibt keinen Sinn, da solche Zeitpunkte in Bereiche fallen würden, in denen die momentane gleichgerichtete Netzspannung zur Energieversorgung der gerade freigegebenen LED-Einheit noch nicht ausreichen würde. Die Spannungsausgleichslängsimpedanz "sähe" eine negative Spannung über sich, was in den meisten Fällen eine außerordentlich unerwünschte Stromunterbrechung in der Gesamtschaltung verursachen würde, die nicht nur zum Flackern führen, sondern sogar das Gegenteil des Erwünschten bewirken kann. Folglich bleibt als mögliches Korrektiv innerhalb einer "ansteigenden Viertelwelle" nur die Verschiebung der Einschaltzeitpunkte der bislang stärker belasteten LED-Einheiten nach hinten. Dem Komparatortransistor Q11, Q21 muss also eine höhere Spannung vorgegaukelt werden, als sie der Flussspannung der zugehörigen LED-Kaskade tatsächlich entspricht, damit der Freigabebefehl eben erst später erfolgt als eigentlich nötig. Demnach liegt beispielsweise am Kondensator C12 die über dem Pufferkondensator C13 abfallende Spannung plus die Offsetspannung V1 an. Entsprechend liegt am Kondensator C22 die über dem Pufferkondensator C23 abfallende Spannung plus die Offsetspannung V2 an. Die Dioden D12 bzw. D22 sind nötig, um die Kondensatoren C12 und C22 von den Knoten N14 bzw. N24 zu entkoppeln, sodass an den Knoten N15 bzw. N25 auch eine negative Spannung möglich ist, wie sie für die Funktionsweise der Schaltungsanordnung benötigt wird. Weiterhin ist zu berücksichtigen, dass die Gleichspannungsquelle 14 nunmehr aus dem Knoten N31 versorgt wird und dadurch auch bei Phasenanschnitt- und -abschnittdimmung eine ausreichende Spannungsversorgung des Knotens N6 sicherstellt.

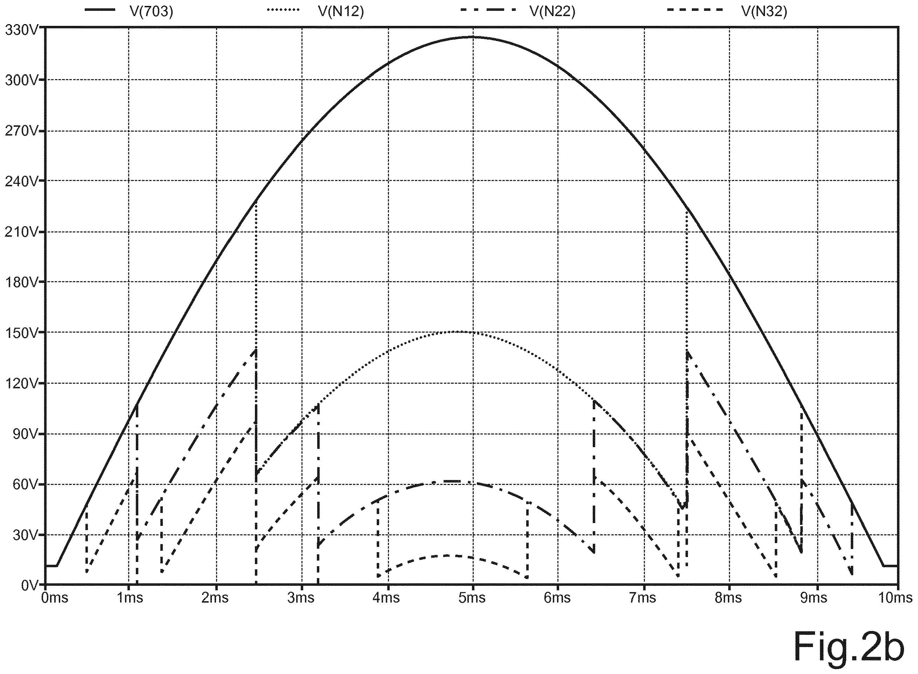

In dem dargestellten Ausführungsbeispiel bzw. zur Ermittlung der Kurvenzüge, wie sie in den Fig. 2b bis 2d dargestellt sind, wurde V1 zu 29V und V2 zu 8V gewählt.

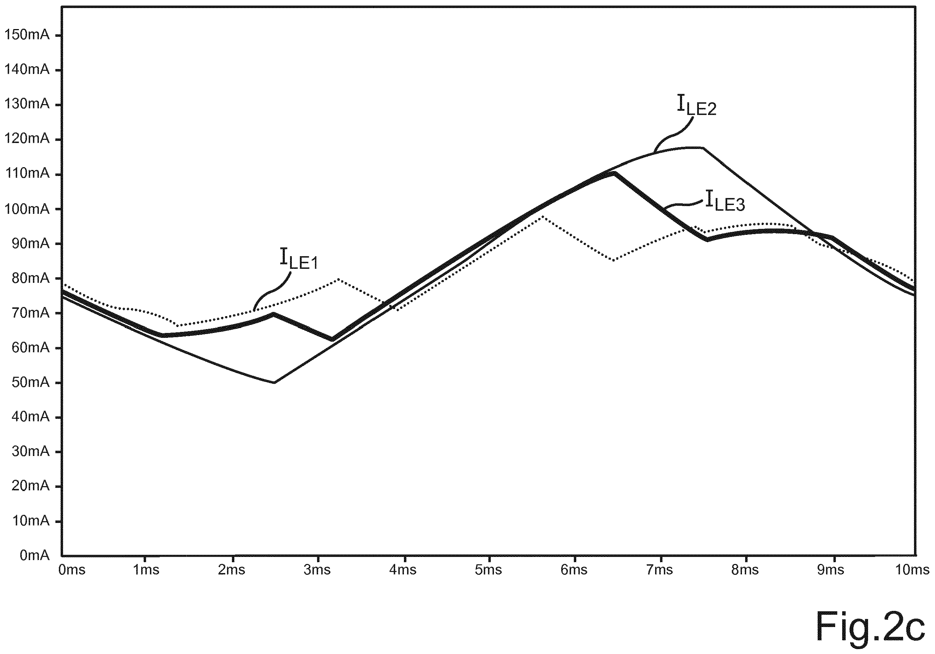

Wie ein Vergleich der Fig. 1b und 2b zeigt, schaltet die LED-Kaskade LE1 nunmehr später ein (2,5ms statt 2ms) und bereits früher wieder aus (7,5ms statt 8ms). Entsprechendes gilt auch für die LED-Kaskade LE2, die zum ersten Mal erst bei etwa 1,2ms einschaltet (anstatt 1ms) und deren letzter Ausschaltvorgang bei 8,8ms stattfindet (anstelle von 9ms). Daraus resultieren die in Fig. 2c dargestellten zeitlichen Verläufe der Ströme I(LE1), I(LE2), I(LE3) durch die LEDs der Kaskaden der LED-Einheiten LE1, LE2, LE3, geglättet durch die zugehörigen Pufferkondensatoren C13, C23 und C33.

Wie aus den Verläufen in Fig. 2c und insbesondere aus einem Vergleich mit Fig. 1c zu erkennen ist, liegen die mittleren Ströme auf fast demselben Niveau. Dies hat zur Folge, dass die LEDs der unterschiedlichen LED-Einheiten einer erfindungsgemäßen Schaltung im Wesentlichen Licht gleicher Helligkeit emittieren und die Strombelastung der LEDs der unterschiedlichen LED-Einheiten nahezu identisch ist. Weiterhin ist zu berücksichtigen, dass der Spitzenstrom gemäß Fig. 1c nahezu 130 mA beträgt, während der Spitzenstrom gemäß Fig. 2c unter 120 mA liegt. Damit können günstigere LEDs eingesetzt werden. Werden in einer erfindungsgemäßen Schaltungsanordnung dieselben LEDs eingesetzt wie bei der aus dem Stand der Technik bekannten Schaltungsanordnung, so werden diese deutlich weniger belastet, was in einer höheren Lebensdauer resultiert.

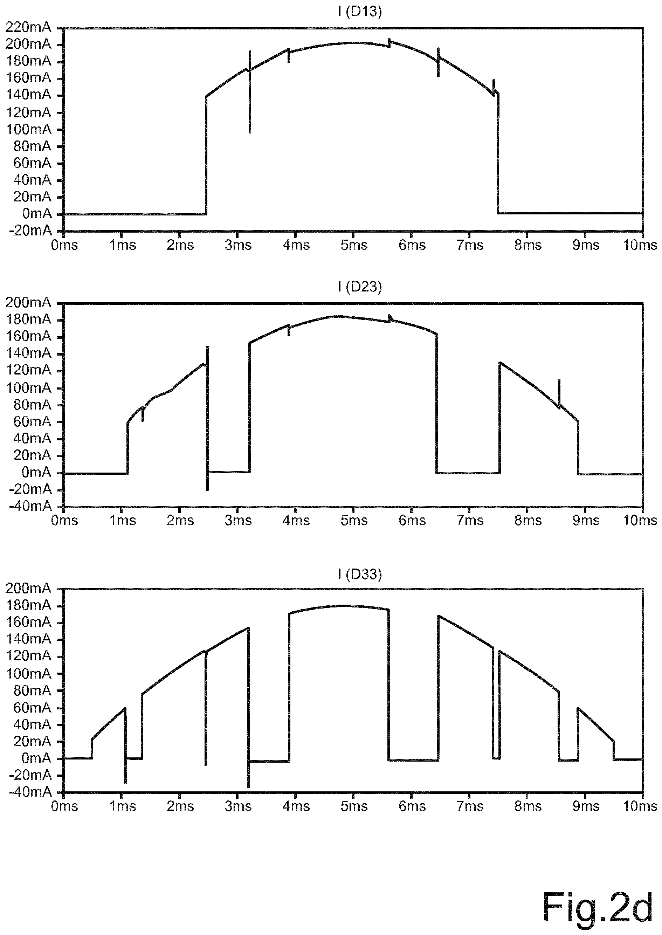

Der Vergleich zwischen Fig. 1d und 2d veranschaulicht deutlich, dass die LEDs der LED-Einheit LE1 nunmehr während eines kürzeren Zeitraums mit Energie versorgt werden, während die zeitlichen Anteile der Energieversorgung der LEDs der LED-Einheiten LE2 und LE3 angewachsen sind.

Fig. 3 zeigt ein erstes Realisierungsbeispiel. Ein erster Spannungsteiler, der die ohmschen Widerstände R25 und R26 umfasst, ist der LED-Kaskade D200 bis D227 parallel geschaltet. Der Abgriff, der demnach den Knoten N14 darstellt, ist mit der Kathode der Diode D12 verbunden. Entsprechend ist in der LED-Einheit LE3 ein ohmscher Spannungsteiler vorgesehen, der die ohmschen Widerstände R35 und R36 umfasst und der LED-Kaskade, die die LEDs D300 bis D313 umfasst, parallel geschaltet ist. Der Abgriff, der den Knoten N24 darstellt, ist mit der Kathode der Diode D22 gekoppelt.

Für die LED-Einheit LE3 ist vorliegend keine Bereitstellung einer Offsetspannung vorgesehen, da diese als tiefstgelegene LED-Einheit ohnehin den geringsten LED-Strom aufweist, und insofern eine weitere Reduktion zur Angleichung an die Ströme der anderen LED-Einheiten keinen Sinn ergibt. Optional kann dies allerdings selbstverständlich geschehen. Es ist jedoch eher erwünscht, die Strombelastung der tiefer gelegenen LED-Einheiten sogar zu erhöhen, was, wie aus Figurenvergleich 1c-2c bzw. 2c-2d ersichtlich, sogar gelingt.

Zu beachten ist, dass die LEDs nach wie vor - von den erfindungsgemäßen Maßnahmen unbeeinflusst - aufgrund der in den jeweiligen Pufferkondensatoren C13, C23, C33 gespeicherten Spannung noch immer mit der ursprünglichen Spannung, wie bei der in Fig. 1a dargestellten Schaltungsanordnung, versorgt werden. Lediglich die in den Spitzenwertdetektoren gespeicherte Spannung wird durch die anliegenden Offsetspannungen variiert.

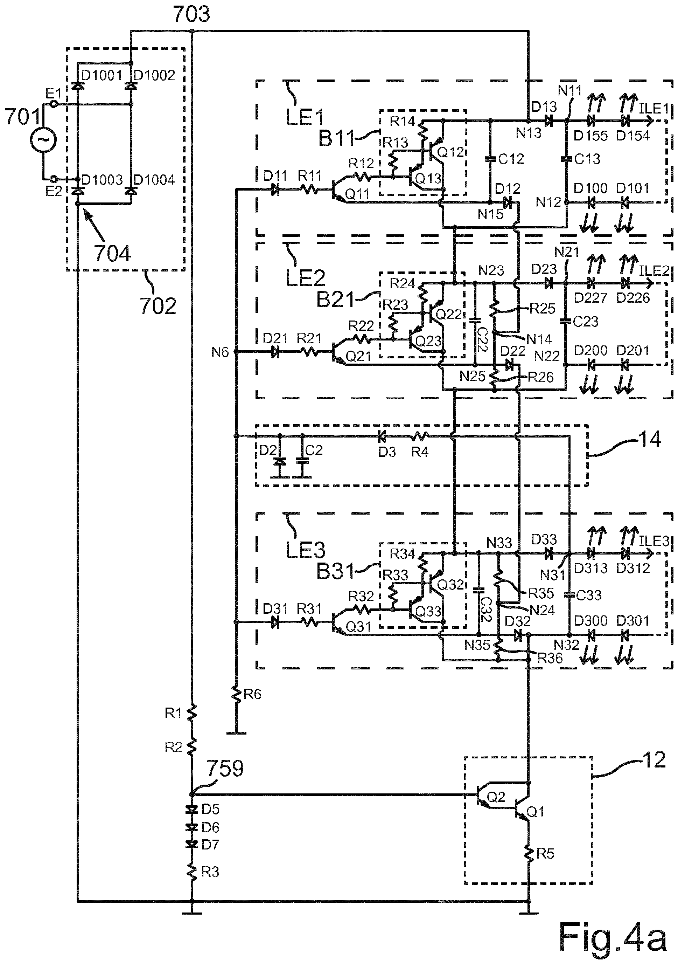

Bei dem in Fig. 4a dargestellten Ausführungsbeispiel sind die jeweiligen ohmschen Spannungsteiler der Strecke Bezugselektrode-Arbeitselektrode des jeweiligen zweiten elektronischen Schalters B21 bzw. B31 parallel geschaltet, wobei der jeweilige Abgriff N14 bzw. N24 des jeweiligen Spannungsteilers wieder mit der Kathode der entsprechenden Diode D12 bzw. D22 gekoppelt ist.

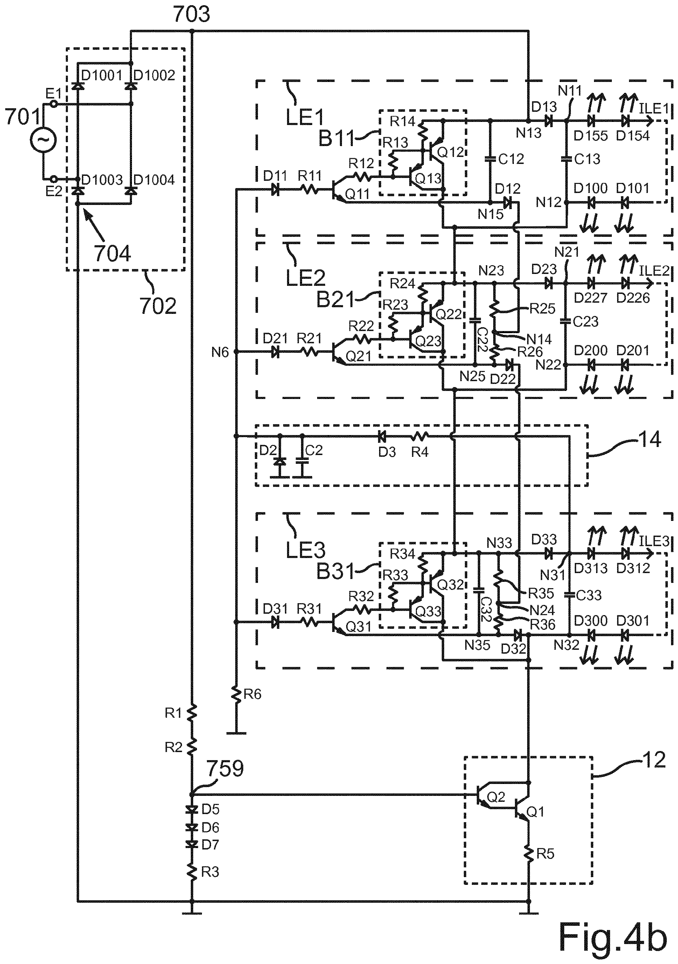

Bei dem in Fig. 4b dargestellten Ausführungsbeispiel sind die jeweiligen ohmschen Spannungsteiler der Strecke zwischen den Bezugselektroden beider elektronischer Schalter der betrachteten LED-Einheit parallel geschaltet, oder einfacher gesagt dem ersten Kondensator derselben LED-Einheit, wobei der jeweilige Abgriff N14 bzw. N24 des jeweiligen Spannungsteilers wieder mit der Kathode der entsprechenden Diode D12 bzw. D22 gekoppelt ist.

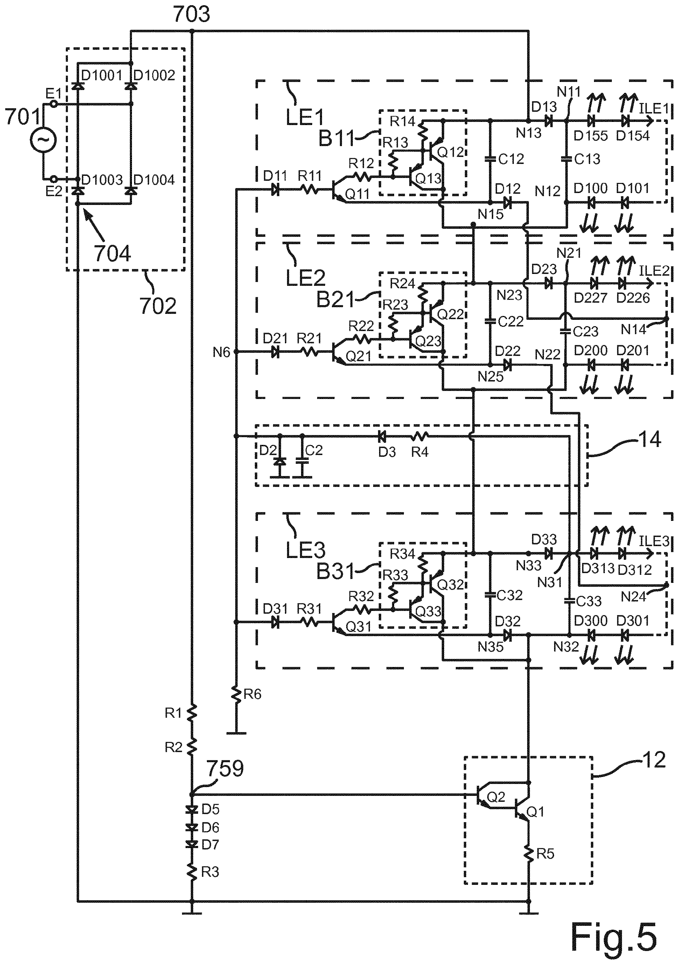

Bei dem in Fig. 5 dargestellten Ausführungsbeispiel ist ein jeweiliger Spannungsteiler durch die LEDs der nächst tiefer liegenden LED-Kaskade gebildet. Insofern ist die Kathode der Diode D12, d.h. der Knoten N14, mit einem Kopplungspunkt gekoppelt, der zwischen zwei LEDs der LED-Kaskade der LED-Einheit LE2, welche die LEDs D200 bis D227 umfasst, liegt. Entsprechend ist die Kathode der Diode D22, der Knoten N24, mit einem Kopplungspunkt der LEDs D300 bis D313 der LED-Kaskade der LED-Einheit LE3 gekoppelt.

In einem nicht dargestellten Ausführungsbeispiel kann der jeweilige Spannungsteiler auch zwei Zenerdioden anstelle der beiden Widerstände oder der LEDs umfassen, um dadurch den Spannungsoffset einzustellen. Im Falle der oben eingeführten ohmschen Spannungsteiler kann insbesondere der untere ohmsche Widerstand R26, R36 durch eine Zenerdiode in Durchbruchsrichtung ersetzt sein.

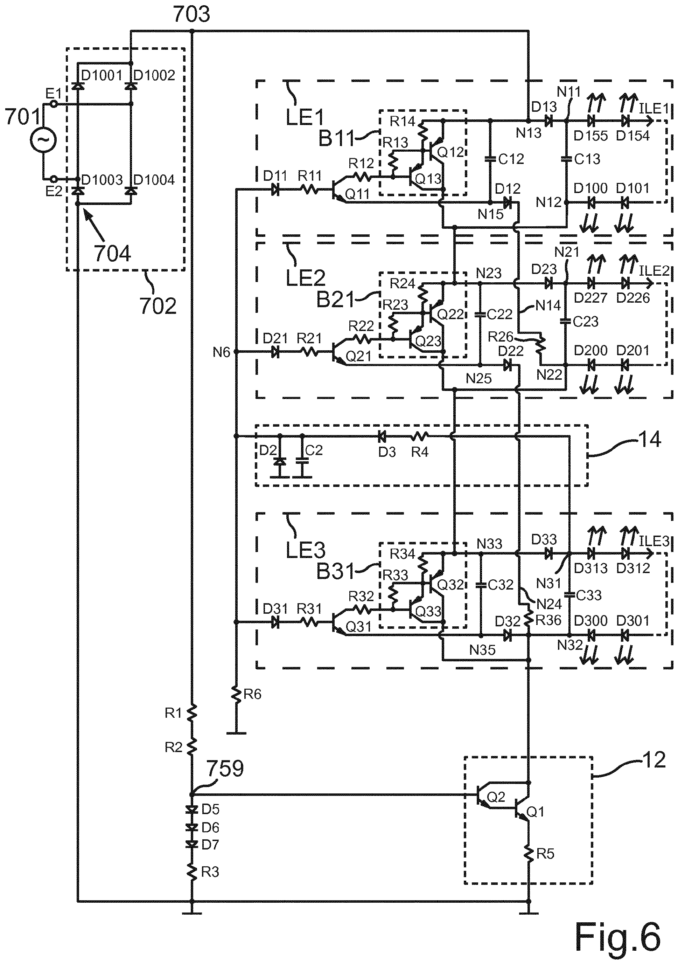

Das in Fig. 6 dargestellte Ausführungsbeispiel entspricht im Wesentlichen dem in Fig. 3 oder in Fig. 4a dargestellten Ausführungsbeispiel, wobei jedoch die höher liegenden Widerstände R25, R35 der beiden ohmschen Spannungsteiler den Wert unendlich annehmen, d.h. durch Leerläufe ersetzt sind.

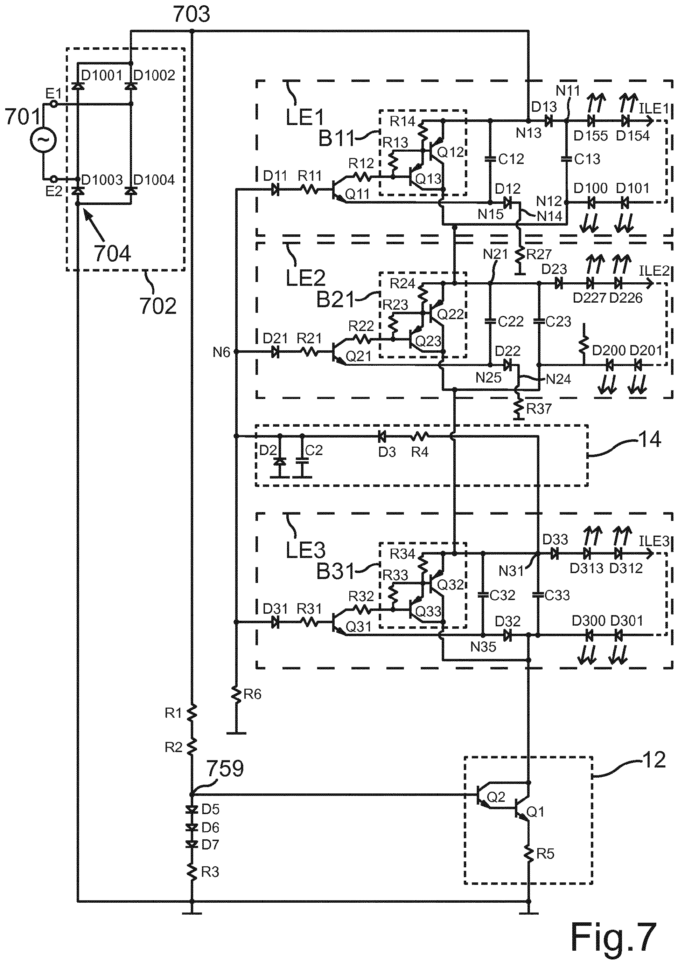

Bei dem in Fig. 7 dargestellten Ausführungsbeispiel ist die Kathode der Diode D12, d.h. der Knoten N14, über einen ohmschen Widerstand R27 mit dem Bezugspotential, d.h. dem Potential am Knoten 704, gekoppelt, während die Diode D22 mit ihrer Kathode, d.h. dem Knoten N24, über einen ohmschen Widerstand R37 mit dem Bezugspotential gekoppelt ist.

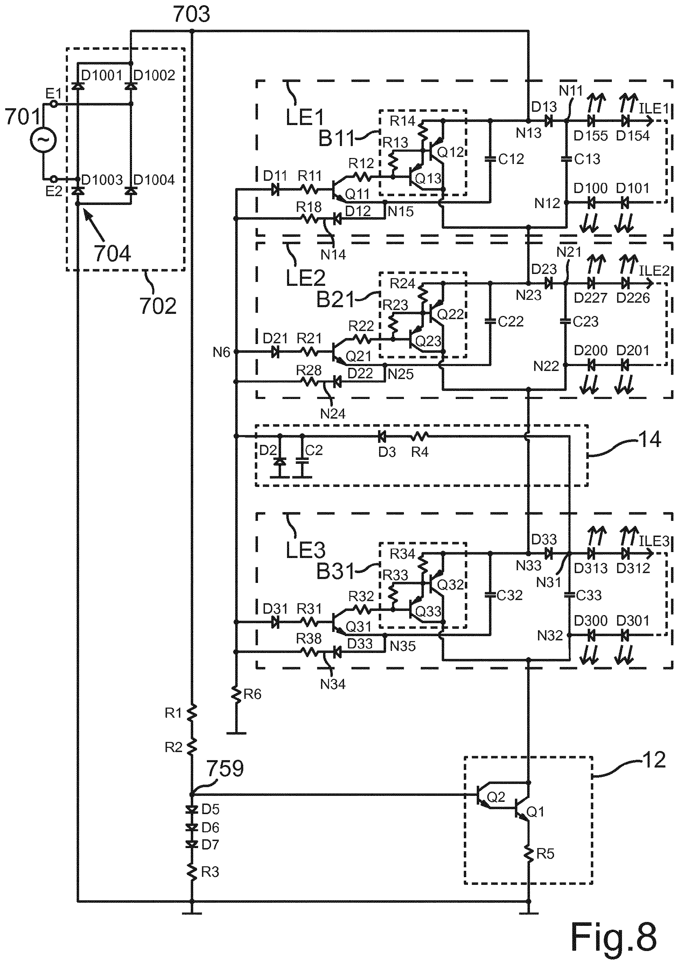

Bei dem in Fig. 8 dargestellten Ausführungsbeispiel ist die Kathode der Diode D12, d.h. der Knoten N14, über einen ohmschen Widerstand R18 mit dem sechsten Knoten N6 gekoppelt. Entsprechendes gilt für die LED-Einheit LE2, bei der die Kathode der Diode D22, der Knoten N24, über einen ohmschen Widerstand R28 mit dem sechsten Knoten N6 gekoppelt ist. Bei dem in Fig. 8 dargestellten Ausführungsbeispiel wird über die Widerstände R18 bzw. R28 eine dermaßen beträchtliche Menge an Strom in den sechsten Knoten N6 eingespeist, dass dort sogar auf die Gleichspannungsquelle 14 zur Erzeugung der Referenzspannung verzichtet werden könnte. Dies resultiert in einem einfacheren Layout der Schaltungsanordnung sowie einer weiteren Kostenersparnis, da durch diese Realisierung weniger Bauelemente benötigt werden.

## Patentansprüche

1. Schaltungsanordnung zum Betreiben mindestens einer ersten und einer zweiten Kaskade von LEDs umfassend:
- einen Eingang mit einem ersten (703) und einem zweiten Eingangsanschluss (704) zum Koppeln mit einer gleichgerichteten Versorgungswechselspannung (701);
- eine Spannungsausgleichslängsimpedanz (12); sowie
- eine erste LED-Einheit (LE2) und zumindest eine zweite in Serie nachgeschaltete LED-Einheit, wobei die als letztes nachgeschaltete LED-Einheit (LE3), welche direkt mit der Spannungsausgleichslängsimpedanz (12) gekoppelt ist, als letzte LED-Einheit (LE3) bezeichnet wird, wobei die erste LED-Einheit (LE2) die erste Kaskade (D200 bis D227) von LEDs und die zweite LED-Einheit die zweite Kaskade (D300 bis D313) von LEDs umfasst;
- wobei jede LED-Einheit (LE2, LE3) weiterhin umfasst:
- eine erste Diode (D23; D33), die seriell zu der jeweiligen LED-Kaskade (D200 bis D227; D300 bis D313) gekoppelt ist, wobei der Kopplungspunkt der ersten Diode (D23; D33) und der jeweiligen LED-Kaskade (D200 bis D227; D300 bis D313) einen ersten Knoten (N21; N31) darstellt, wobei der nicht mit der ersten Diode (D23; D33) gekoppelte Anschluss der LED-Kaskade (D200 bis D227; D300 bis D313) einen zweiten Knoten (N22; N32) darstellt, wobei der nicht mit der LED-Kaskade (D200 bis D227; D300 bis D313) gekoppelte Anschluss der ersten Diode (D23; D33) einen dritten Knoten (N23; N33) darstellt;
- die Serienschaltung eines ersten Kondensators (C22; C32) und einer zweiten Diode (D22; D32), die zwischen den dritten Knoten (N23; N33) und einen vierten Knoten (N24; N34) der Schaltungsanordnung gekoppelt ist, wobei der Kopplungspunkt des ersten Kondensators (C22; C32) mit der zweiten Diode (D22; D32) einen fünften Knoten (N25; N35) darstellt, wobei die Anode der zweiten Diode (D22; D32) mit dem fünften Knoten (N25; N35) gekoppelt ist; und
- einen ersten (Q21; Q31) und einen zweiten elektronischen Schalter (B21; B31) mit jeweils einer Steuerelektrode, einer Bezugselektrode und einer Arbeitselektrode, wobei die Steuerelektrode des ersten elektronischen Schalters (Q21; Q31) mit einem sechsten Knoten (N6) gekoppelt ist, wobei die Bezugselektrode des ersten elektronischen Schalters (Q21; Q31) mit dem fünften Knoten (N25; N35) gekoppelt ist, wobei die Arbeitselektrode des ersten elektronischen Schalters (Q21; Q31) mit der Steuerelektrode des zweiten elektronischen Schalters (B21; B31) gekoppelt ist, wobei die Bezugselektrode des zweiten elektronischen Schalters (B21; B31) mit dem dritten Knoten (N23; N33) gekoppelt ist, wobei die Arbeitselektrode des zweiten elektronischen Schalters (B21; B31) mit dem zweiten Knoten (N22; N32) gekoppelt ist;
- wobei der dritte Knoten (N23; N33) der ersten LED-Einheit (LE2) mit dem ersten Eingangsanschluss (703) gekoppelt ist, wobei der zweite Knoten (N32) der letzten LED-Einheit (LE3) derart mit der Spannungsausgleichslängsimpedanz (12) gekoppelt ist, dass die Spannungsausgleichslängsimpedanz (12) seriell zwischen den zweiten Knoten (N32) der letzten LED-Einheit (LE3) und den zweiten Eingangsanschluss (704) gekoppelt ist;
- wobei der dritte Knoten (N23; N33) einer jeweiligen LED-Einheit (LE2, LE3), die nicht die erste LED-Einheit (LE2) darstellt, mit dem zweiten Knoten (N22; N32) der in Serie vorgeschalteten LED-Einheit gekoppelt ist;
- wobei die sechsten Knoten (N6) aller LED-Einheiten (LE2, LE3) mit einer Gleichspannungsquelle (14) gekoppelt sind;
**dadurch gekennzeichnet,**
**dass** jedenfalls in den LED-Einheiten (LE2, LE3), die nicht die letzte LED-Einheit (LE3) darstellen, der vierte Knoten (N24; N34) einen Knoten der Schaltungsanordnung darstellt, der zumindest während einer vorgebbaren Zeitdauer während des Betriebs der Schaltungsanordnung durch Hinzufügen eines Spannungsoffsets (V1, V2) auf einem tieferen Potential liegt als der jeweilige zweite Knoten (N22; N32) der jeweiligen LED-Einheit (LE2, LE3).

2. Schaltungsanordnung nach Anspruch 1,
**dadurch gekennzeichnet,**
**dass** die Schaltungsanordnung weiterhin einen Spannungsteiler (R1, R2, D5, D6, D7, R3) umfasst, der zwischen den ersten und den zweiten Eingangsanschluss (703, 704) gekoppelt ist,
wobei die Spannungsausgleichslängsimpedanz (12) als Linearregler ausgebildet ist, wobei der Abgriff des Spannungsteilers (R1, R2, D5, D6, D7, R3) mit dem Eingang des Linearreglers gekoppelt ist.

3. Schaltungsanordnung nach einem der Ansprüche 1 oder 2,
**dadurch gekennzeichnet,**
**dass** jede LED-Einheit (LE2, LE3) weiterhin einen zweiten Kondensator (C23; C33) umfasst, der der jeweiligen LED-Kaskade (D200 bis D227; D300 bis D313) parallel geschaltet ist.

4. Schaltungsanordnung nach einem der vorhergehenden Ansprüche,
**dadurch gekennzeichnet,**
**dass** der jeweilige vierte Knoten (N24; N34) jedenfalls dann auf einem tieferen Potential liegt als der jeweilige zweite Knoten (N22; N32), wenn sowohl der erste (Q21; Q31) als auch der zweite elektronische Schalter (B21; B31) der jeweiligen LED-Einheit nicht leiten und somit über dem zweiten elektronischen Schalter (B21, B31) dieser LED-Einheit mindestens eine Spannung ansteht, die der Flussspannung der von ihr umfassten Kaskade von LEDs (D200 bis D227; D300 bis D313) entspricht.

5. Schaltungsanordnung nach Anspruch 4,
**dadurch gekennzeichnet,**
**dass** jedenfalls die LED-Einheiten, die nicht die letzte LED-Einheit (LE3) darstellen, einen jeweiligen Spannungsteiler (R25, R26; R35, R36) umfassen, der zwischen zwei Knoten der in Serie nachgeschalteten LED-Einheit gekoppelt ist, wobei der vierte Knoten (N24; N34) den Abgriff des jeweiligen Spannungsteilers (R25, R26; R35, R36) darstellt.

6. Schaltungsanordnung nach Anspruch 5,
**dadurch gekennzeichnet,**
**dass** der jeweilige Spannungsteiler (R25, R26; R35, R36) als ohmscher Spannungsteiler ausgebildet ist und dem jeweiligen zweiten Kondensator (C23; C33) der in Serie nachgeschalteten LED-Einheit parallel geschaltet ist.

7. Schaltungsanordnung nach Anspruch 5,
**dadurch gekennzeichnet,**
**dass** der jeweilige Spannungsteiler als ohmscher Spannungsteiler (R25, R26; R35, R36) ausgebildet ist und der Strecke Bezugselektrode-Arbeitselektrode des zweiten elektronischen Schalters (B21; B31) der in Serie nachgeschalteten LED-Einheit parallel geschaltet ist.

8. Schaltungsanordnung nach Anspruch 5,
**dadurch gekennzeichnet,**
**dass** der jeweilige Spannungsteiler als ohmscher Spannungsteiler (R25, R26; R35, R36) ausgebildet ist und dem ersten Kondensator (C22; C32) der in Serie nachgeschalteten LED-Einheit parallel geschaltet ist.

9. Schaltungsanordnung nach einem der Ansprüche 5 bis 8,
**dadurch gekennzeichnet,**
**dass** der jeweilige Spannungsteiler einen ersten höher liegenden (R25, R35) und einen zweiten tiefer liegenden (R26, R36) ohmschen Widerstand umfasst, wobei der Widerstandswert des ersten ohmschen Widerstands (R25, R26) den Wert unendlich annimmt, d.h. durch einen Leerlauf ersetzt wird.

10. Schaltungsanordnung nach Anspruch 5,
**dadurch gekennzeichnet,**
**dass** der jeweilige Spannungsteiler durch die LEDs der in Serie nachgeschalteten LED-Kaskade gebildet ist in der Form, dass sein Abgriff, der jeweilige vierte Knoten (N24; N34), mit einem geeigneten Knoten zwischen zwei LEDs der in Serie nachgeschalteten LED-Kaskade gekoppelt ist.

11. Schaltungsanordnung nach einem der Ansprüche 1 bis 4,
**dadurch gekennzeichnet,**
**dass** jedenfalls die LED-Einheiten, die nicht die letzte LED-Einheit (LE3) darstellen, einen jeweiligen ohmschen Widerstand (R27; R37) umfassen, dessen erster Anschluss mit dem zweiten Eingangsanschluss (704) gekoppelt ist, wobei der vierte Knoten (N24; N34) den zweiten Anschluss des jeweiligen ohmschen Widerstands (R27; R37) darstellt.

12. Schaltungsanordnung nach einem der Ansprüche 1 bis 4,
**dadurch gekennzeichnet,**
**dass** jedenfalls in den LED-Einheiten, die nicht die letzte LED-Einheit (LE3) darstellen, der vierte Knoten (N24; N34), bevorzugt über einen ohmschen Widerstand (R18; R28), mit den sechsten Knoten (N6) gekoppelt ist.

13. Schaltungsanordnung nach einem der vorhergehenden Ansprüche,
**dadurch gekennzeichnet,**
**dass** die Gleichspannungsquelle (14) dadurch realisiert ist, dass die im Betrieb der Schaltungsanordnung am ersten (N31) oder am zweiten Knoten (N32) der letzten LED-Einheit (LE3) auftretende Spannung zur Erzeugung einer Gleichspannung verwendet wird.

14. Schaltungsanordnung nach Anspruch 13,
**dadurch gekennzeichnet,**
**dass** die Gleichspannungsquelle (14) eine Ladungspumpe (D2, C2, D3, R4) umfasst, deren Eingang mit dem ersten (N31) oder dem zweiten Knoten (N32) der letzten LED-Einheit (LE3) gekoppelt ist und deren Ausgang mit den sechsten Knoten (N6) aller LED-Einheiten gekoppelt ist.

15. Schaltungsanordnung nach einem der vorhergehenden Ansprüche,
**dadurch gekennzeichnet,**
**dass** die LED-Einheiten (LE2, LE3) jeweils eine unterschiedliche Anzahl an LEDs umfassen, wobei bevorzugt jede in Serie vorgeschaltete LED-Einheit (LE2) die doppelte Anzahl an LEDs umfasst wie die in Serie nachgeschaltete LED-Einheit (LE3).

## Claims

1. Circuit arrangement for operating at least a first and a second cascade of LEDs comprising:
- an input having a first (703) and a second (704) input connection for coupling to a rectified AC supply voltage (701);
- a voltage equalization series impedance (12); and
- a first LED unit (LE2) and at least one second LED unit connected downstream in series, wherein the LED unit (LE3) connected downstream last, which is directly coupled to the voltage equalization series impedance (12), is referred to as the last LED unit (LE3), wherein the first LED unit (LE2) comprises the first cascade (D200 to D227) of LEDs and the second LED unit comprises the second cascade (D300 to D313) of LEDs;
- wherein each LED unit (LE2, LE3) additionally comprises:
- a first diode (D23; D33) coupled in series with the respective LED cascade (D200 to D227; D300 to D313), wherein the coupling point between the first diode (D23; D33) and the respective LED cascade (D200 to D227; D300 to D313) is a first node (N21; N31), wherein that connection of the LED cascade (D200 to D227; D300 to D313) that is not coupled to the first diode (D23; D33) is a second node (N22; N32), wherein that connection of the first diode (D23; D33) that is not coupled to the LED cascade (D200 to D227; D300 to D313) is a third node (N23; N33);
- the series connection of a first capacitor (C22; C32) and a second diode (D22; D32), which is coupled between the third node (N23; N33) and a fourth node (N24; N34) of the circuit arrangement, wherein the coupling point between the first capacitor (C22; C32) and the second diode (D22; D32) is a fifth node (N25; N35), the anode of the second diode (D22; D32) being coupled to the fifth node (N25; N35); and
- a first (Q21; Q31) and a second (B21; B31) electronic switch each having a control electrode, a reference-ground electrode and a main electrode, wherein the control electrode of the first electronic switch (Q21; Q31) is coupled to a sixth node (N6), wherein the reference-ground electrode of the first electronic switch (Q21; Q31) is coupled to the fifth node (N25; N35), wherein the main electrode of the first electronic switch (Q21; Q31) is coupled to the control electrode of the second electronic switch (B21; B31), wherein the reference-ground electrode of the second electronic switch (B21; B31) is coupled to the third node (N23; N33), wherein the main electrode of the second electronic switch (B21; B31) is coupled to the second node (N22; N32);
- wherein the third node (N23; N33) of the first LED unit (LE2) is coupled to the first input connection (703), wherein the second node (N32) of the last LED unit (LE3) is coupled to the voltage equalization series impedance (12) such that the voltage equalization series impedance (12) is coupled in series between the second node (N32) of the last LED unit (LE3) and the second input connection (704);
- wherein the third node (N23; N33) of a respective LED unit (LE2, LE3) that is not the first LED unit (LE2) is coupled to the second node (N22; N32) of the LED unit connected upstream in series;
- wherein the sixth nodes (N6) of all LED units (LE2, LE3) are coupled to a DC voltage source (14);
**characterized**
**in that** in the LED units (LE2, LE3) that are not the last LED unit (LE3), the fourth node (N24; N34) is at any rate a node of the circuit arrangement that is, by adding a voltage offset (V1, V2), at a lower potential, at least during a prescribable period during the operation of the circuit arrangement, than the respective second node (N22; N32) of the respective LED unit (LE2, LE3).

2. Circuit arrangement according to Claim 1,
**characterized**
**in that** the circuit arrangement additionally comprises a voltage divider (R1, R2, D5, D6, D7, R3) that is coupled between the first and second input connections (703, 704), wherein the voltage equalization series impedance (12) is in the form of a linear controller, the tap of the voltage divider (R1, R2, D5, D6, D7, R3) being coupled to the input of the linear controller.

3. Circuit arrangement according to either of Claims 1 and 2,
**characterized**
**in that** each LED unit (LE2, LE3) additionally comprises a second capacitor (C23; C33) that is connected in parallel with the respective LED cascade (D200 to D227; D300 to D313).

4. Circuit arrangement according to one of the preceding claims,
**characterized**
**in that** the respective fourth node (N24; N34) is at a lower potential than the respective second node (N22; N32) at any rate when both the first (Q21; Q31) and the second (B21; B31) electronic switch of the respective LED unit are not on and hence across the second electronic switch (B21, B31) of this LED unit there is at least one voltage that corresponds to the forward voltage of the cascade of LEDs (D200 to D227; D300 to D313) that said LED unit comprises.

5. Circuit arrangement according to Claim 4,
**characterized**
**in that** the LED units that are not the last LED unit (LE3) at any rate comprise a respective voltage divider (R25, R26; R35, R36) that is coupled between two nodes of the LED unit connected downstream in series, the fourth node (N24; N34) being the tap of the respective voltage divider (R25, R26; R35, R36).

6. Circuit arrangement according to Claim 5,
**characterized**
**in that** the respective voltage divider (R25, R26; R35, R36) is in the form of a resistive voltage divider and the respective second capacitor (C23; C33) has the LED unit connected downstream in series connected in parallel with it.

7. Circuit arrangement according to Claim 5,
**characterized**
**in that** the respective voltage divider is in the form of a resistive voltage divider (R25, R26; R35, R36) and the reference-ground electrode/main electrode path of the second electronic switch (B21; B31) has the LED unit connected downstream in series connected in parallel with it.

8. Circuit arrangement according to Claim 5,
**characterized**
**in that** the respective voltage divider is in the form of a resistive voltage divider (R25, R26; R35, R36) and the first capacitor (C22; C32) has the LED unit connected downstream in series connected in parallel with it.

9. Circuit arrangement according to one of Claims 5 to 8,
**characterized**
**in that** the respective voltage divider comprises a first higher (R25, R35) and a second lower (R26, R36) nonreactive resistor, the resistance value of the first nonreactive resistor (R25, R26) assuming the value infinity, i.e. being replaced by an open circuit.

10. Circuit arrangement according to Claim 5,
**characterized**
**in that** the respective voltage divider is formed by the LEDs of the LED cascade connected downstream in series in the form that the tap of said voltage divider, the respective fourth node (N24; N34), is coupled to a suitable node between two LEDs of the LED cascade connected downstream in series.

11. Circuit arrangement according to one of Claims 1 to 4,
**characterized**
**in that** the LED units that are not the last LED unit (LE3) at any rate comprise a respective nonreactive resistor (R27; R37) whose first connection is coupled to the second input connection (704), the fourth node (N24; N34) being the second connection of the respective nonreactive resistor (R27; R37).

12. Circuit arrangement according to one of Claims 1 to 4,
**characterized**
**in that** in the LED units that are not the last LED unit (LE3), the fourth node (N24; N34) is at any rate coupled, preferably via a nonreactive resistor (R18; R28), to the sixth node (N6).

13. Circuit arrangement according to one of the preceding claims,
**characterized**
**in that** the DC voltage source (14) is implemented by virtue of the voltage that occurs on the first (N31) or on the second (N32) node of the last LED unit (LE3) during operation of the circuit arrangement being used to produce a DC voltage.

14. Circuit arrangement according to Claim 13,
**characterized**
**in that** the DC voltage source (14) comprises a charge pump (D2, C2, D3, R4) whose input is coupled to the first (N31) or to the second (N32) node of the last LED unit (LE3) and whose output is coupled to the sixth node (N6) of all LED units.

15. Circuit arrangement according to one of the preceding claims,
**characterized**
**in that** the LED units (LE2, LE3) each comprise a different number of LEDs, preferably each LED unit (LE2) connected upstream in series comprising twice the number of LEDs than the LED unit (LE3) connected downstream in series.

## Revendications

1. Agencement de circuit pour faire fonctionner au moins une première et une seconde cascades de LED comprenant :
- une entrée comportant une première (703) et une seconde (704) bornes d'entrée à connecter à une tension alternative d'alimentation redressée (701),
- une impédance série de stabilisation de tension (12), et
- un premier groupe de LED (LE2) et au moins un second groupe de LED connecté en aval en série, dans lequel le groupe de LED connecté en aval en dernière position (LE3), qui est directement couplé à l'impédance série de stabilisation de tension (12), est désigné le dernier groupe de LED (LE3), et le premier groupe de LED (LE2) comprend la première cascade (D200 à D227) de LED et le second groupe de LED comprend la seconde cascade (D300 à D313) de LED,
- dans lequel chaque groupe de LED (LE2, LE3) comprend en outre :
- une première diode (D23, D33), qui est couplée en série à la cascade de LED respective (D200 à D227, D300 à D313), dans lequel le point de couplage de la première diode (D23, D33) et de la cascade de LED respective (D200 à D227, D300 à D313) représente un premier noeud (N21, N31), la borne de la cascade de LED (D200 à D227, D300 à D313) non couplée à la première diode (D23, D33) représente un second noeud (N22, N32), et la borne de la première diode (D23, D33) non couplée à la cascade de LED (D200 à D227, D300 à D313) représente un troisième noeud (N23, N33),
- le circuit en série d'un premier condensateur (C22, C32) et d'une seconde diode (D22, D32), qui est couplé entre le troisième noeud (N23, N33) et un quatrième noeud (N24, N34) de l'agencement de circuit, dans lequel le point de couplage du premier condensateur (C22, C32) avec la seconde diode (D22, D32) représente un cinquième noeud (N25, N35), l'anode de la seconde diode (D22, D32) étant couplée au cinquième noeud (N25, N35), et
- un premier (Q21, Q31) et un second (B21, B31) commutateurs électroniques comportant chacun une électrode de commande, une électrode de référence et une électrode de travail, dans lequel l'électrode de commande du premier commutateur électronique (Q21, Q31) est couplée à un sixième noeud (N6), l'électrode de référence du premier commutateur électronique (Q21, Q31) est couplée au cinquième noeud (N25, N35) et l'électrode de travail du premier commutateur électronique (Q21, Q31) est couplée à l'électrode de commande du second commutateur électronique (B21, B31), l'électrode de référence du second commutateur électronique (B21, B31) est couplée au troisième noeud (N23, N33), et l'électrode de travail du second commutateur électronique (B21, B31) est couplée au second noeud (N22, N32),
- dans lequel le troisième noeud (N23, N33) du premier groupe de LED (LE2) est couplé à la première borne d'entrée (703), le second noeud (N32) du dernier groupe de LED (LE3) est couplé à l'impédance série de stabilisation de tension (12) de telle sorte que l'impédance série de stabilisation de tension (12) est couplée en série entre le second noeud (N32) du dernier groupe de LED (LE3) et la seconde borne d'entrée (704),
- dans lequel le troisième noeud (N23, N33) d'un groupe de LED respectif (LE2, LE3) qui ne représente pas le premier groupe de LED (LE2), est couplé au second noeud (N22, N32) du groupe de LED connecté en amont en série,
- dans lequel les sixièmes noeuds (N6) de tous les groupes de LED (LE2, LE3) sont couplés à une source de tension continue (14),
**caractérisé en ce qu'**en tout cas, dans les groupes de LED (LE2, LE3) qui ne constituent pas le dernier groupe de LED (LE3), le quatrième noeud (N24, N34) représente un noeud de l'agencement de circuit qui est, au moins pendant une période prédéterminée durant le fonctionnement de l'agencement de circuit, à un potentiel plus bas que le second noeud respectif (N22, N32) du groupe de LED respectif (LE2, LE3), par l'ajout d'un décalage de tension (V1, V2).

2. Agencement de circuit selon la revendication 1, **caractérisé en ce que** l'agencement de circuit comprend en outre un diviseur de tension (R1, R2, D5, D6, D7, R3) qui est couplé entre la première et la seconde bornes d'entrée (703, 704), dans lequel l'impédance série de stabilisation de tension (12) est configurée sous forme d'un régulateur linéaire, et la prise de prélèvement du diviseur de tension (R1, R2, D5, D6, D7, R3) est couplée à l'entrée du régulateur linéaire.

3. Agencement de circuit selon l'une des revendications 1 ou 2, **caractérisé en ce que** chaque groupe de LED (LE2, LE3) comprend en outre un second condensateur (C23, C33) qui est connecté en parallèle à la cascade de LED respective (D200 à D227, D300 à D313).

4. Agencement de circuit selon l'une des revendications précédentes,
**caractérisé en ce que** le quatrième noeud respectif (N24, N34) est en tout cas à un potentiel plus bas que le second noeud respectif (N22, N32) lorsque le premier (Q21, Q31) et le second (B21, B31) commutateurs électroniques du groupe de LED respectif sont non conducteurs et ainsi au moins une tension est appliquée via le second commutateur électronique (B21, B31) de ce groupe de LED, laquelle tension correspond à la tension de polarisation directe de la cascade de LED (D200 à D227, D300 à D313) du groupe respectif.

5. Agencement de circuit selon la revendication 4, **caractérisé en ce qu'**en tout cas les groupes de LED qui ne constituent pas le dernier groupe de LED (LE3), comprennent un diviseur de tension respectif (R25, R26, R35, R36) qui est couplé entre deux noeuds du groupe de LED connecté en série en aval, dans lequel le quatrième noeud (N24, N34) représente la prise de prélèvement du diviseur de tension respectif (R25, R26, R35, R36).

6. Agencement de circuit selon la revendication 5, **caractérisé en ce que** le diviseur de tension respectif (R25, R26, R35, R36) est configuré sous forme d'un diviseur de tension ohmique et est monté en parallèle au second condensateur respectif (C23, C33) du groupe de LED connecté en série en aval.

7. Agencement de circuit selon la revendication 5, **caractérisé en ce que** le diviseur de tension respectif est configuré sous forme d'un diviseur de tension ohmique (R25, R26, R35, R36) et est connecté en parallèle à la liaison électrode de référence - électrode de travail du second commutateur électronique (B21, B31) du groupe de LED monté en série en aval.

8. Agencement de circuit selon la revendication 5, **caractérisé en ce que** le diviseur de tension respectif est configuré sous forme d'un diviseur de tension ohmique (R25, R26, R35, R36) et est monté en parallèle au premier condensateur (C22, C32) du groupe de LED monté en série en aval.

9. Agencement de circuit selon l'une des revendications 5 à 8, **caractérisé en ce que** le diviseur de tension respectif comprend une première résistance ohmique (R25, R35) de valeur élevée et une seconde résistance ohmique (R26, R36) de valeur inférieure, dans lequel la valeur de la première résistance ohmique (R25, R26) prend la valeur infinie, à savoir qu'elle est remplacée par un circuit ouvert.

10. Agencement de circuit selon la revendication 5, **caractérisé en ce que** le diviseur de tension respectif est formé par les LED de la cascade de LED montée en série en aval, de telle manière que sa prise de prélèvement, à savoir le quatrième noeud respectif (N24, N34), est couplée à un noeud approprié entre deux LED de la cascade de LED montée en série en aval.

11. Agencement de circuit selon l'une des revendications 1 à 4, **caractérisé en ce qu'**en tout cas les groupes de LED qui ne constituent pas le dernier groupe de LED (LE3) comprennent une résistance ohmique respective (R27, R37), dont la première borne est couplée à la seconde borne d'entrée (704), et dans lequel le quatrième noeud (N24, N34) représente la seconde borne de la résistance ohmique respective (R27, R37).

12. Agencement de circuit selon l'une des revendications 1 à 4, **caractérisé en ce qu'**en tout cas, dans les groupes de LED qui ne constituent pas le dernier groupe de LED (LE3), le quatrième noeud (N24, N34) est couplé au sixième noeud (N6), de préférence via une résistance ohmique (R18, R28).

13. Agencement de circuit selon l'une des revendications précédentes, **caractérisé en ce que** la source de tension continue (14) est réalisée de telle sorte que la tension produite durant le fonctionnement de l'agencement de circuit au niveau du premier (N31) ou du second noeud (N32) du dernier groupe de LED (LE3) est utilisée pour produire une tension continue.

14. Agencement de circuit selon la revendication 13, **caractérisé en ce que** la source de tension continue (14) comprend une pompe de charge (D2, C2, D3, R4), dont l'entrée est couplée au premier (N31) ou au second noeud (N32) du dernier groupe de LED (LE3) et dont la sortie est couplée au sixième noeud (N6) de tous les groupes de LED.

15. Agencement de circuit selon l'une des revendications précédentes, **caractérisé en ce que** les groupes de LED (LE2, LE3) possèdent chacun un nombre différent de LED, dans lequel de préférence chaque groupe de LED (LE2) connecté en série en amont comprend un nombre de LED deux fois plus grand que le nombre de LED du groupe de LED connecté en série en aval (LE3).
